# EUROPÄISCHE PATENTSCHRIFT

(11) **EP 2 373 666 B1**
(45) Veröffentlichungstag und Bekanntmachung des Hinweises auf die Patenterteilung: **24.09.2014**
(21) Anmeldenummer: 09751775.9
(22) Anmeldetag: 06.10.2009
(51) Int. Cl.: C07F 9/30, C07F 9/48, C08K 5/53, C09K 21/12

(54) **VERFAHREN ZUR HERSTELLUNG VON MONO-AMINOFUNKTIONALISIERTEN DIALKYLPHOSPHINSÄUREN, -ESTERN UND -SALZEN MITTELS ACRYLNITRILEN UND IHRE VERWENDUNG**
METHOD FOR PRODUCING MONO-AMINOFUNCTIONALIZED DIALKYLPHOSPHINIC ACIDS AND ESTERS AND SALTS THEREOF BY MEANS OF ACRYLNITRILES AND USE THEREOF
PROCÉDÉ POUR PRODUIRE DES ACIDES, DES ESTERS ET DES SELS DIALKYLPHOSPHINIQUES AU MOYEN D'ACRYLONITRILES ET LEUR UTILISATION

(30) Priorität: 07.11.2008 DE 102008056341
(43) Veröffentlichungstag der Anmeldung: 12.10.2011
(73) Patentinhaber: Clariant Finance (BVI) Limited, Road Town, Tortola (VG)
(72) Erfinder: HILL, Michael, 22043 Hamburg (DE); KRAUSE, Werner, 50354 Hürth (DE); SICKEN, Martin, 51149 Köln (DE)
(74) Vertreter: Paczkowski, Marcus
(86) Internationale Anmeldenummer: PCT/EP2009/007132
(87) Internationale Veröffentlichungsnummer: WO 2010/051892

(56) Entgegenhaltungen:
- EP-A1- 0 463 560
- EP-A2- 0 319 482
- WO-A1-2010/051886
- US-A- 4 594 199
- US-A- 5 190 934
- US-A1- 2002 187 977
- US-A1- 2005 187 196
- MONTCHAMP J L: "Recent advances in phosphorus-carbon bond formation: synthesis of H-phosphinic acid derivatives from hypophosphorous compounds" JOURNAL OF ORGANOMETALLIC CHEMISTRY, ELSEVIER-SEQUOIA S.A. LAUSANNE, CH, Bd. 690, Nr. 10, 16. Mai 2005 (2005-05-16) , Seiten 2388-2406, XP004877374 ISSN: 0022-328X
- SYLVINE DEPRÈLE ET AL: "Palladium-Catalyzed Hydrophosphinylation of Alkenes and Alkynes" JOURNAL OF THE AMERICAN CHEMICAL SOCIETY, AMERICAN CHEMICAL SOCIETY, WASHINGTON, DC. US, Bd. 124, Nr. 32, 1. Januar 2002 (2002-01-01), Seite 9387, XP002500862 ISSN: 0002-7863
- BRAVO-ALTAMIRANO ET AL: "A novel approach to phosphonic acids from hypophosphorous acid" TETRAHEDRON LETTERS, ELSEVIER, AMSTERDAM, NL, Bd. 48, Nr. 33, 19. Juli 2007 (2007-07-19) , Seiten 5755-5759, XP022163552 ISSN: 0040-4039
- SYLVINE DEPRÈLE ET AL: "Environmentally Benign Synthesis of H-Phosphinic Acids Using a Water-Tolerant, Recyclable Polymer-Supported Catalyst" ORGANIC LETTERS, AMERICAN CHEMICAL SOCIETY, US, Bd. 6, Nr. 21, 1. Januar 2004 (2004-01-01) , Seiten 3805-3808, XP002500861 ISSN: 1523-7060 [gefunden am 2004-09-18]
- PATRICE RIBIÈRE ET AL: "NiCl2-Catalyzed Hydrophosphinylation" JOURNAL OF ORGANIC CHEMISTRY, AMERICAN CHEMICAL SOCIETY, EASTON.; US, Bd. 70, Nr. 10, 1. Januar 2005 (2005-01-01), Seiten 4064-4072, XP002530191 ISSN: 0022-3263
- FROESTL W. ET AL: "PHOSPHINIC ACID ANALOGUES OF GABA. 2. SELECTIVE, ORALLY ACTIVE GABAB ANTAGONISTS" JOURNAL OF MEDICINAL CHEMISTRY, AMERICAN CHEMICAL SOCIETY, WASHINGTON, US, Bd. 38, Nr. 17, 1. Januar 1995 (1995-01-01), Seiten 3313-3331, XP000999491 ISSN: 0022-2623

## Beschreibung

Die Erfindung betrifft ein Verfahren zur Herstellung von mono-aminofunktionalisierten Dialkylphosphinsäuren, -estern und -salzen mittels Acrylnitrilen und ihre Verwendung.

W. Froestl et al. beschreiben in J. of Med. Chem., Am. Chem. Soc., Nr. 17 vom 01.11.1995 auf den Seiten 3313 - 3331 die pharmakologischen Eigenschaften von substituierten 3-Aminopropylphosphinsäuren.

In der EP-A-0463560 werden stickstoffhaltige 3-Aminopropylphosphinsäuren beschrieben, die GABAB-antagonistische Eigenschaften aufweisen und als Arzneimittelwirkstoffe verwendet werden.

Die US-A-2002/0187977 beschreibt Arzneimittel, die zur Behandlung von Stress-Symptomatiken eingesetzt werden und als Bestandteil u. a. 3-Aminopropyl-n-butylphosphinsäure enthält.

Bisher fehlt es an Verfahren zur Herstellung von mono-aminofunktionalisierten Dialkylphosphinsäuren, -estern und -salzen, die wirtschaftlich und großtechnisch zugänglich sind und die insbesondere eine hohe Raum-/Zeitausbeute ermöglichen. Auch fehlt es an Verfahren, die ohne störende Halogenverbindungen als Edukte ausreichend effektiv sind und zudem an solchen, bei denen die Endprodukte leicht erhalten bzw. isoliert werden können oder auch unter gezielten Reaktionsbedingungen (wie etwa einer Umesterung) gezielt und gewünscht hergestellt werden können.

Die Erfindung betrifft daher ein Verfahren zur Herstellung von mono-aminofunktionalisierten Dialkylphosphinsäuren, -estern und -salzen, dadurch gekennzeichnet, dass man
a) eine Phosphinsäurequelle (I) 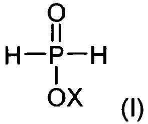 mit Olefinen (IV) 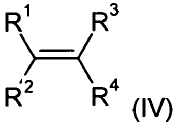 in Gegenwart eines Katalysators A zu einer Alkylphosphonigsäure, deren Salz oder Ester (II) 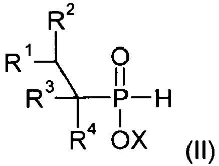 umsetzt,
b) die so entstandene Alkylphosphonigsäure, deren Salz oder Ester (II) mit einem Acrylnitril (V) 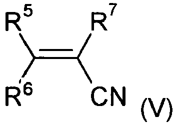 in Gegenwart eines Katalysators B zum mono-funktionalisierten Dialkylphosphinsäurederivat (VI) umsetzt und 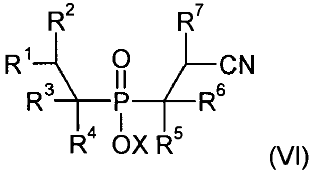
c) so entstandenes mono-funktionalisiertes Dialkylphosphinsäurederivat (VI) mit einem Reduktionsmittel oder in Gegenwart eines Katalysators C mit Wasserstoff zum mono-aminofunktionalisierten Dialkylphosphinsäurederivat (III) 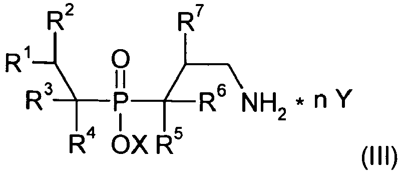 umsetzt oder die nach Schritt a) erhaltene Alkylphosphonigsäure, deren Salz oder Ester (II) und/oder die nach Schritt b) erhaltene mono-funktionalisierte Dialkylphosphinsäure, deren Salz oder Ester (VI) und/oder die nach Schritt c) erhaltene mono-aminofunktionalisierte Dialkylphosphinsäure, deren Salz oder Ester (III) und/oder die jeweils resultierende Reaktionslösung davon mit einem Alkylenoxid oder einem Alkohol M-OH und/oder M'-OH verestert, und den jeweils entstandenen Alkylphosphonigsäureester (II), monofunktionalisierten Dialkylphosphinsäurester (IV) und/oder mono-aminofunktionalisierten Dialkylphosphinsäureester (III) den weiteren Reaktionsschritten b) oder c) unterwirft, wobei R¹, R², R³, R⁴, R⁵, R⁶, R⁷ gleich oder verschieden sind und unabhängig voneinander H, C₁-C₁₈-Alkyl, C₆-C₁₈-Aryl, C₆-C₁₈-Aralkyl, C₆-C₁₈-Alkyl-Aryl bedeuten und X für C₁-C₁₈-Alkyl, C₆-C₁₈-Aryl, C₆-C₁₈-Aralkyl, C₆-C₁₈-Alkyl-Aryl und/oder für Mg, Ca, Al, Sb, Sn, Ge, Ti, Fe, Zr, Zn, Ce, Bi, Sr, Mn, Cu, Ni, Li, Na, K, H und/oder eine protonierte Stickstoffbase steht, wobei Y für eine Mineralsäure, Carbonsäure, Lewissäure oder organische Säure steht, wobei die Gruppen C₆-C₁₈-Aryl, C₆-C₁₈-Aralkyl und C₆-C₁₈-Alkyl-Aryl mit SO₃X₂, -C(O)CH₃, OH, CH₂OH, NH₂, NO₂, OCH₃, SH und/oder OC(O)CH₃ substituiert sein können und n für eine ganze oder gebrochene Zahl von 0 bis 4 steht und es sich bei dem Katalysatoren A und C um Übergangsmetalle, Übergangsmetallverbindungen und/oder Katalysatorsysteme handelt, die sich aus einem Übergangsmetall und/oder einer Übergangsmetallverbindung und mindestens einem Liganden zusammensetzen und es sich bei dem Katalysator B um Peroxide bildende Verbindungen, Peroxoverbindungen und/oder Azo-Verbindungen handelt.

Bevorzugt setzt man die nach Schritt c) erhaltene mono-aminofunktionalisierte Dialkylphosphinsäure, deren Salz oder Ester (III) anschließend in einem Schritt d) mit Metallverbindungen von Mg, Ca, Al, Sb, Sn, Ge, Ti, Fe, Zr, Zn, Ce, Bi, Sr, Mn, Li, Na, K und/oder einer protonierte Stickstoffbase zu den entsprechenden mono-aminofunktionalisierten Dialkylphosphinsäuresalzen (III) dieser Metalle und/oder einer Stickstoffverbindung um.

Bevorzugt sind R¹, R², R³, R⁴, R⁵, R⁶, R⁷ gleich oder verschieden und bedeuten unabhängig voneinander H, Methyl, Ethyl, n-Propyl, Isopropyl, n-Butyl, Isobutyl, tert.-Butyl und/oder Phenyl.

Bevorzugt bedeutet X H, Ca, Mg, Al, Zn, Ti, Fe, Ce, Methyl, Ethyl, n-Propyl, Isopropyl, n-Butyl, Isobutyl, tert. Butyl, Phenyl, Ethylenglykol, Propylglykol, Butylglykol, Pentylglykol, Hexylglykol, Allyl und/oder Glycerin.
Bevorzugt handelt es sich bei den Übergangsmetallen und/oder Übergangsmetallverbindungen um solche aus der siebten und achten Nebengruppe.

Bevorzugt handelt es sich bei den Übergangsmetallen und/oder Übergangsmetallverbindungen um Rhodium, Ruthenium, Nickel, Palladium, Platin.

Bevorzugt handelt es sich bei dem Katalysator B um Wasserstoffperoxid, Natriumperoxid, Lithiumperoxid, Kaliumpersulfat, Natriumpersulfat, Ammoniumpersulfat, Natriumperoxodisulfat, Kaliumperoxoborat, Peressigsäure, Benzoylperoxid, Di-t-butylperoxid und/oder Peroxodischwefelsäure und/oder um Azodiisobutyronitril, 2,2'-Azobis(2-amidinopropan)-dihydrochlorid und/oder 2,2'-Azobis(N,N'-dimethylen-isobutyramidin)-dihydrochlorid.

Bevorzugt handelt es sich bei den Acrylnitrilen (V) um Acrylnitril, Methacrylnitril, Ethyl-2-cyanoacrylat, 3-Phenylacrylnitril, 2-Methyl-2-butennitril.

Bevorzugt handelt es bei dem Alkohol der allgemeinen Formel M-OH um lineare oder verzweigte, gesättigte und ungesättigte, einwertige organische Alkohole mit einer Kohlenstoffkettenlänge von C₁-C₁₈ und es bei dem Alkohol der allgemeinen Formel M'-OH um lineare oder verzweigte, gesättigte und ungesättigte, mehrwertige organische Alkohole mit einer Kohlenstoffkettenlänge von C₁-C₁₈.

Die Erfindung betrifft auch die Herstellung von mono-aminofunktionalisierten Dialkylphosphinsäuren, -estern und -salzen nach einem oder mehreren der Ansprüche 1 bis 10, und anschließende Verwendung dieser Produkte als Zwischenprodukt für weitere Synthesen, als Binder, als Vernetzer bzw. Beschleuniger beim Aushärten von Epoxyharzen, Polyurethanen, ungesättigten Polyesterharzen, als Polymerstabilisatoren, als Pflanzenschutzmittel, als Sequestrierungsmittel, als Mineralöl-Additiv, als Korrosionsschutzmittel, in Wasch-und Reinigungsmittelanwendungen und in Elektronikanwendungen.

Die Erfindung betrifft zudem die Verwendung von mono-aminofunktionalisierten Dialkylphosphinsäuren, -salzen und -estern, hergestellt nach einem oder mehreren der Ansprüche 1 bis 10 und anschließende Verwendung dieser Produkte als Flammschutzmittel, insbesondere als Flammschutzmittel für Klarlacke und Intumeszenzbeschichtungen, als Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung.

Die Erfindung betrifft auch flammgeschützte thermoplastische oder duroplastische Polymerformmasse, enthaltend 0,5 bis 45 Gew.-% mono-aminofunktionalisierte Dialkylphosphinsäuren, -salze oder -ester, die nach einem oder mehreren der Ansprüche 1 bis 10 hergestellt wurden, 0,5 bis 95 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

Die Erfindung betrifft zuletzt auch flammgeschützte thermoplastische oder duroplastische Polymer-Formkörper, -Filme,- Fäden und Fasern, enthaltend 0,5 bis 45 Gew.-% mono-aminofunktionalisierte Dialkylphosphinsäuren, -salze oder -ester, die nach einem oder mehreren der Ansprüche 1 bis 10 hergestellt wurden, 0,5 bis 95 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

Bevorzugt ist Y Salzsäure, Schwefelsäure, Salpetersäure, Phosphorsäure, Phosphonsäure, Phosphinsäure, Ameisensäure, Essigsäure, Propionsäure, Buttersäure, Milchsäure, Palmsäure, Stearinsäure, Malonsäure, Maleinsäure, Fumarsäure, Weinsäure, Zitronensäure, Ascorbinsäure, Trimethylboran, Triethylboran, Tributylboran oder Triphenylboran.

Bevorzugt steht n für 0, ¼, ⅓, ½, 1, 2, 3 und 4.

Bevorzugt werden die Katalysatorsysteme A und C jeweils durch Umsetzung von einem Übergangsmetall und/oder einer Übergangsmetallverbindung und mindestens einem Liganden gebildet.Verfahren nach einem oder mehreren der Ansprüche 1 bis 8, dadurch gekennzeichnet, dass es sich bei den Reduktionsmitteln um Metallhydride, Borhydride, Metallborhydride, Aluminiumhydride und/oder Metallaluminiumhydride handelt.

Alle vorgenannten Umsetzungen können auch stufenweise ausgeführt werden; ebenso können in den verschiedenen Verfahrensschritten auch die jeweiligen resultierenden Reaktionslösungen eingesetzt werden.

Handelt es sich bei der mono-aminofunktionalisierten Dialkylphosphinsäure (III) nach Schritt c) um einen Ester, so kann bevorzugt eine saure oder basische Hydrolyse durchgeführt werden, um die freie mono-aminofunktionalisierte Dialkylphosphinsäure oder deren Salz zu erhalten.

Bevorzugt handelt es sich bei den herzustellenden Zielverbindungen, d. h. den mono-aminofunktionalisierten Dialkylphosphinsäuren um 3-(Ethylhydroxyphosphinyl)-1-aminopropan, 3-(Propylhydroxyphosphinyl)-1-aminopropan, 3-(i-Propylhydroxy-phosphinyl)-1-aminopropan, 3-(Butylhydroxyphosphinyl)-1-aminopropan, 3-(sec-Butylhydroxyphosphinyl)-1-aminopropan, 3-(i-Butylhydroxy-phosphinyl)-1-aminopropan, 3-(2-Phenylethylhydroxyphosphinyl)-1-aminopropan, 3-(Ethylhydroxyphosphinyl)-2-methyl-1-aminopropan, 3-(Propylhydroxyphosphinyl)-2-methyl-1-aminopropan, 3-(i-Propylhydroxyphosphinyl)-2-methyl-1-aminopropan, 3-(Butylhydroxyphosphinyl)-2-methyl-1-aminopropan, 3-(sec-Butylhydroxyphosphinyl)-2-methyl-1-aminopropan, 3-(i-Butylhydroxy-phosphinyl)-2-methyl-1-aminopropan, 3-(2-Phenylethylhydroxy-phosphinyl)-2-methyl-1-aminopropan,3-(Ethylhydroxyphosphinyl)-3-phenyl-1-aminopropan, 3-(Propylhydroxyphosphinyl)-3-phenyl-1-aminopropan, 3-(i-Propyl-hydroxyphosphinyl)-3-phenyl-1-aminopropan, 3-(Butylhydroxyphosphinyl)-3-phenyl-1-aminopropan, 3-(sec-Butylhydroxyphosphinyl)-3-phenyl-1-aminopropan, 3-(i-Butyl-hydroxyphosphinyl)-3-phenyl-1-aminopropan, 3-(2-Phenylethyl-hydroxyphosphinyl)-3-phenyl-1-aminopropan; bei den Estern um Methyl-, Ethyl-; i-Propyl-; Butyl-; Phenyl-, 2-Hydroxyethyl-, 2-Hydroxypropyl-, 3-Hydroxypropyl-, 4-Hydroxybutyl- und/oder 2,3-Dihydroxypropylester der vorgenannten mono-aminofunktionalisierten Dialkylphosphinsäuren und bei den Salzen ein Aluminium(III)-, Calcium(II)-, Magnesium (II)-, Cer(III)-, Ti(IV)- und/oder Zink(II)salz der vorgenannten mono-aminofunktionalisierten Dialkylphosphinsäuren.

Bevorzugt ist die Aminofunktionalität der oben genannten mono-aminofunktionalisierten Dialkylphosphinsäuren, deren Salze und Ester der Formel (III) ein "freies" Amin oder bildet mit Mineralsäuren, Carbonsäuren, Lewissäuren, ogranischen Säuren oder Mischungen dieser Säuren Ammoniumsalze.

Bevorzugte Mineralsäuren sind beispielsweise Salzsäure, Schwefelsäure, Salpetersäure oder Phosphorsäure, Phosphonsäure, Phosphinsäure.

Bevorzugte Carbonsäuren sind beispielsweise Ameisensäure, Essigsäure, Propionsäure, Buttersäure, Milchsäure, Palmsäure, Stearinsäure, Malonsäure, Maleinsäure, Fumarsäure, Weinsäure, Zitronensäure und Ascorbinsäure.

Bevorzugte Lewissäuren sind Borane, wie beispielsweise Diboran, Trialkylborane, wie beispielsweise Trimethylboran, Triethylboran, Tributylboran und Triarylborane, wie beispielsweise Triphenylboran.

Bevorzugt handelt es sich bei den Übergangsmetallen für den Katalysator A um Elemente der siebten und achten Nebengruppe (nach moderner Nomenklatur ein Metall der Gruppe 7, 8, 9 oder 10), wie etwa Rhenium, Ruthenium, Cobalt, Rhodium, Iridium, Nickel, Palladium und Platin.

Bevorzugt werden als Quelle der Übergangsmetalle und Übergangsmetallverbindungen deren Metallsalze verwendet. Geeignete Salze sind solche von Mineralsäuren, die die Anionen Fluorid, Chlorid, Bromid, Iodid, Fluorat, Chlorat, Bromat, Iodat, Fluorit, Chlorit, Bromit, lodit, Hypofluorit, Hypochlorit, Hypobromit, Hypoiodit, Perfluorat, Perchlorat, Perbromat, Periodat, Cyanid, Cyanat, Nitrat, Nitrid, Nitrit, Oxid, Hydroxid, Borat, Sulfat, Sulfit, Sulfid, Persulfat, Thiosulfat, Sulfamat, Phosphat, Phosphit, Hypophosphit, Phosphid, Carbonat und Sulfonat, wie etwa Methansulfonat, Chlorosulfonat, Fluorosulfonat, Trifluoromethansulfonat, Benzolsulfonat, Naphthylsulfonat, Toluolsulfonat, t-Butylsulfonat, 2-Hydroxypropansulfonat und sulfonierte lonentauscherharze; und/oder organische Salze, wie etwa Acetylacetonate und Salze einer Carbonsäure mit bis zu 20 Kohlenstoffatomen, wie etwa Format, Acetat, Propionat, Butyrat, Oxalat, Stearat und Zitrat einschließlich halogenierter Carbonsäuren mit bis zu 20 Kohlenstoffatomen, wie etwa Trifluoracetat, Trichloracetat, enthalten.

Eine weitere Quelle der Übergangsmetalle und Übergangsmetallverbindungen stellen Salze der Übergangsmetalle mit Tetraphenylborat- und halogenierten Tetraphenylboratanionen, wie etwa Perfluorophenylborat, dar.

Geeignete Salze beeinhalten ebenso Doppelsalze und Komplexsalze bestehend aus einem oder mehreren Übergangsmetallionen und unabhängig voneinander ein oder mehrere Alkalimetall-, Erdalkalimetall-, Ammonium-, organische Ammonium-, Phosphonium- und organische Phosphoniumionen und unabhängig voneinander ein oder mehrere oben genannter Anionen. Geeignete Doppelsalze stellen z. B. Ammoniumhexachloropalladat und Ammoniumtetrachloropalladat dar.

Bevorzugt ist eine Quelle der Übergangsmetalle das Übergangsmetall als Element und/oder eine Übergangsmetallverbindung in dessen null-wertigem Zustand.

Bevorzugt wird das Übergangsmetall metallisch eingesetzt oder als Legierung mit weiteren Metallen verwendet, wobei hier Bor, Zirconium, Tantal, Wolfram, Rhenium, Kobalt, Iridium, Nickel, Palladium, Platin und/oder Gold bevorzugt ist. Dabei ist der Übergangsmetallgehalt in der eingesetzten Legierung bevorzugt 45 - 99,95 Gew.-%.

Bevorzugt wird das Übergangsmetall mikrodispers (Teilchengröße 0,1 mm - 100 µm) eingesetzt.

Bevorzugt wird das Übergangsmetall auf einem Metalloxid wie etwa Aluminiumoxid, Siliciumdioxid, Titandioxid, Zirkoniumdioxid, Zinkoxid, Nickeloxid, Vanadiumoxid, Chromoxid, Magnesiumoxid, Celite^{®}, Kieselgur, auf einem Metallcarbonat wie etwa Bariumcarbonat, Calciumcarbonat, Strontiumcarbonat, auf einem Metallsulfat wie etwa Bariumsulfat, Calciumsulfat, Strontiumsulfat, auf einem Metallphosphat wie etwa Aluminiumphosphat, Vanadiumphosphat, auf einem Metallcarbid wie etwa Siliconcarbid, auf einem Metallaluminat wie etwa Calciumaluminat, auf einem Metallsilikat wie etwa Aluminiumsilikat, Kreiden, Zeolithe, Bentonit, Montmorillonit, Hectorit, auf funktionalisierten Silikaten, funktionalisierten Silikagelen wie etwa SiliaBond^{®}, QuadraSil™, auf funktionalisierten Polysiloxanen wie etwa Deloxan^{®}, auf einem Metallnitrid, auf Kohle, Aktivkohle, Mullite, Bauxite, Antimonite, Scheelite, Perovskite, Hydrotalcite, Heteropolyanionen, auf funktionalisierter und unfunktionalisierter Cellulose, Chitosan, Keratin, Heteropolyanionen, auf Ionentauschern wie etwa Amberlite™, Amberjet™, Ambersep™, Dowex^{®}, Lewatit^{®}, ScavNet^{®}, auf funktionalisierten Polymeren wie etwa Chelex^{®}, QuadraPure™, Smopex^{®}, PolyOrgs^{®}, auf polymergebundenen Phosphanen, Phosphanoxiden, Phosphinaten, Phosphonaten, Phosphaten, Aminen, Ammoniumsalzen, Amiden, Thioamiden, Harnstoffen, Thioharnstoffen, Triazinen, Imidazolen, Pyrazolen, Pyridinen, Pyrimidinen, Pyrazinen, Thiolen, Thiolether, Thiolester, Alkoholen, Alkoxiden, Ether, Ester, Carbonsäuren, Acetaten, Acetalen, Peptiden, Hetarenen, Polyethylenimin/Siliciumdioxid und/oder Dendrimeren geträgert verwendet.

Geeignete Quellen der Metallsalze und/oder Übergangsmetalle stellen bevorzugt ebenfalls deren Komplexverbindungen dar. Komplexverbindungen der Metallsalze und/oder Übergangsmetalle setzen sich aus den Metallsalzen bzw. Übergangsmetalle und einem oder mehreren Komplexbildnern zusammen. Geeignete Komplexbildner sind z. B. Olefine, Diolefine, Nitrile, Dinitrile, Kohlenmonoxid, Phosphine, Diphosphine, Phosphite, Diphosphite, Dibenzylidenaceton, Cyclopentadienyl, Indenyl oder Styrol. Geeignete Komplexverbindungen der Metallsalze und/oder Übergangsmetalle können auf den oben genannten Trägermaterialien geträgert sein.

Bevorzugt ist der Gehalt an den genannten geträgerten Übergangsmetallen 0,01 bis 20 Gew.-%, vorzugsweise 0,1 bis 10 Gew.-%, insbesondere 0,2 bis 5 Gew.-%, bezogen auf die Gesamtmasse des Trägermaterials.

Geeignete Quellen von Übergangsmetallen und Übergangsmetallverbindungen sind beispielsweise
Palladium, Platin, Nickel, Rhodium; Palladium Platin, Nickel oder Rhodium,auf Alumina, auf Silika, auf Bariumcarbonat, auf Bariumsulfat, auf Calciumcarbonat, auf Strontiumcarbonat, auf Kohle, auf Aktivkohle; Platin-Palladium-Gold-, Aluminum-Nickel-, Eisen-Nickel-, Lanthanoid-Nickel, Zirconium-Nickel-, Platin-Iridium-, Platin-Rhodium-Legierung; Raney^{®}-Nickel, Nickel-Zink-Eisen-Oxid; Palladium(II)-, Nickel(II)- ,Platin(II)-, Rhodiumchlorid, -bromid, -iodid, -fluorid, -hydrid, -oxid, -peroxid, -cyanid, -sulfat, -nitrat, -phosphid, -borid, -chromoxid, -cobaltoxid, -carbonathydroxid, -cyclohexanbutyrat, -hydroxid, -molybdat, -octanoat, -oxalat, -perchlorat, -phthalocyanin, -5,9,14,18,23,27,32,36-octabutoxy-2,3-naphthalocyanin, -sulfamat, -perchlorat, -thiocyanat, -bis(2,2,6,6-tetramethyl-3,5-heptanedionat), -propionat, -acetat, -stearat, -2-ethylhexanoat, -acetylacetonat, -hexafluoroacetylacetonat, -tetrafluoroborat, -thiosulfat, -trifluoroacetat, -phthalocyanintetrasulfonsäure Tetranatriumsalz, -methyl, -cyclopentadienyl, -methylcyclopentadienyl, -ethylcyclopentadienyl, -pentamethylcyclo-pentadienyl, -2,3,7,8,12,13,17,18-octaethyl-21H,23H-porphin, -5,10,15,20-tetraphenyl-21H,23H-porphin, -bis(5-[[4-(dimethylamino)phenyl]imino]-8(5H)-quinolinon), -2,11,20,29-tetra-tert-butyl-2,3-naphthalocyanin, -2,9,16,23-tetraphenoxy-29H,31H-phthalocyanin, -5,10,15,20-tetrakis(pentafluorophenyl)-21H,23H-porphin und deren 1,4-Bis(diphenylphosphin)butan-, 1,3-Bis(diphenylphosphino)propan-, 2-(2'-Di-tert-butylphosphin)biphenyl-, Acetonitril-, Benzonitril-, Ethylendiamin-, Chloroform-, 1,2-Bis(phenyl-sulfinyl)ethan-, 1,3-Bis(2,6-düsopropylphenyl)imidazoliden)(3-chloro-pyridyl)-, 2'-(Dimethylamino)-2-biphenylyl-, Dinorbornylphosphin-, 2-(Dimethylaminomethyl)ferrocen-, Allyl-, Bis(Diphenylphosphino)butan-, (N-succinimidyl)bis-(triphenylphosphin)-, Dimethylphenylphosphin-, Methyldiphenylphosphin-, 1,10-Phenanthrolin-, 1,5-Cyclooctadien-, N,N,N',N'-Tetramethylethylendiamin-, Triphenylphosphin-, Tri-o-tolylphosphin-, Tricyclohexylphosphin-, Tributylphosphin-, Triethylphosphin-, 2,2'-Bis(diphenylphosphino)-1,1'-binaphthyl-, 1,3-Bis(2,6-diisopropylphenyl)imidazol-2-yliden-, 1,3-Bis(mesityl)imidazol-2-yliden-, 1,1'-Bis(di-phenylphosphino)ferrocen-, 1,2-Bis(diphenylphosphino)ethan-, N-Methylimidazol-, 2,2'-Bipyridin-, (Bicyclo[2.2.1]-hepta-2,5-dien)-, Bis(di-tert-butyl(4-dimethylaminophenyl)phosphin)-, Bis(tert.-butylisocyanid)-, 2-Methoxyethylether-, Ethylenglycoldi-methylether-, 1,2-Dimethoxyethan-, Bis(1,3-diamino-2-propanol)-, Bis(N,N-diethylethylendiamin)-, 1,2-Diaminocyclohexan-, Pyridin-, 2,2':6',2"-terpyridin-, Diethylsulfid-, Ethylen-,Amin-Komplexe; Kalium-, Natrium-, Ammoniumhexachloro-palladat(IV), Kalium-, Natrium-, Ammoniumtetrachloropalladat(II), Bromo(tri-tert-butylphosphin)palladium(I) Dimer, (2-Methyl-allyl)palladium(II)chlorid Dimer, Bis(dibenzylidenaceton)palladium(0), Tris(dibenzylidenaceton)dipalladium(0), Tetrakis(triphenylphosphin)palladium(0), Tetrakis-(tricyclohexylphosphin)palladium (0), Bis[1,2-bis(diphenyl-phosphin)ethan]-palladium(0), Bis(3,5,3',5'-dimethoxydibenzyl-idenaceton)palladium(0), Bis(tri-tert-butylphosphin)palladium(0), meso-Tetraphenyltetrabenzoporphin Palladium, Tetrakis(methyldiphenylphosphin)palladium(0), Tris(3,3',3"-phophinidyn-tris(benzolsulfonato)palladium(0) Nonanatriumsalz, 1,3-Bis(2,4,6-trimethylphenyl)-imidazol-2-yliden(1,4-naphthoquinon)palladium(0), 1,3-Bis(2,6-diisopropylphenyl)-imidazol-2-yliden(1,4-naphthoquinon)palladium(0), und deren Chloroform-Komplex; Allylnickel(II)chlorid Dimer, Ammoniumnickel(II)sulfat, Bis(1,5-cyclooctadien)nickel(0), Bis(triphenylphosphin)dicarbonylnickel(0), Tetrakis(triphenylphosphin)nickel(0), Tetrakis(triphenylphosphit)nickel(0), Kaliumhexafluoronickelat(IV), Kaliumtetracyanonickelat(II), Kaliumnickel(IV)paraperiodat, Dilithiumtetrabromonickelat(II), Kaliumtetracyanonickelat(II);
Platin(IV)chlorid, -oxid, -sulfid, Kalium-, Natrium-, Ammoniumhexachloro-platinat(IV), Kalium-, Ammoniumtetrachloroplatinat(II), Kaliumtetracyanoplatinat(II), Trimethyl(methylcyclopentadienyl)platin(IV), cis-Diammintetrachloroplatin(IV), Kaliumtrichloro(ethylen)platinat(II), Natriumhexahydroxyplatinat(IV), Tetraaminplatin(II)tetrachloroplatinat(II), Tetrabutylammoniumhexachloroplatinat(IV), Ethylenbis(triphenylphosphin)platin(0), Platin(0)-1,3-divinyl-1,1,3,3-tetramethyldisiloxan, Platin(0)-2,4,6,8-tetramethyl-2,4,6,8-tetravinylcyclotetrasiloxan, Tetrakis(triphenyl-phosphin)platin(0), Platinoctaethylporphyrin, Chloroplatinsäure, Carboplatin; Chlorobis(ethylen)rhodium Dimer, Hexarhodiumhexadecacarbonyl, Chloro(1,5-cyclooctadien)rhodium Dimer, Chloro(norbomadien)-rhodium Dimer, Chloro(1,5-hexadien)rhodium Dimer.

Bevorzugt handelt es sich bei den Liganden um Phosphine der Formel (VII)

PR⁹₃ (VII)

in der die Reste R⁹ unabhängig voneinander für Wasserstoff, geradkettiges, verzweigtes oder cyclisches C₁-C₂₀-Alkyl, C₁-C₂₀-Alkylaryl, C₂-C₂₀-Alkenyl, C₂-C₂₀-Alkinyl, C₁-C₂₀-Carboxyat, C₁-C₂₀-Alkoxy, C₁-C₂₀-Alkenyloxy, C₁-C₂₀-Alkinyloxy, C₂-C₂₀-Alkoxy-carbonyl, C₁-C₂₀-Alkylthio, C₁-C₂₀-Alkylsulfonyl, C₁-C₂₀-Alkylsulfinyl, Silyl und/oder deren Derivative und/oder durch wenigstens ein R¹⁰ substituiertes Phenyl- oder durch wenigstens ein R¹⁰ substituiertes Naphtyl stehen. R¹⁰ steht unabhängig voneinander für Wasserstoff, Fluor, Chlor, Brom, Iod, NH₂, Nitro, Hydroxy, Cyano, Formyl, geradkettiges, verzweigtes oder cyclisches C₁-C₂₀-Alkyl, C₁-C₂₀-Alkoxy, HN(C₁-C₂₀-Alkyl), N(C₁-C₂₀-Alkyl)₂, -CO₂-(C₁-C₂₀-Alkyl), -CON(C₁-C₂₀-Alkyl)₂, -OCO(C₁-C₂₀-Alkyl), NHCO(C₁-C₂₀-Alkyl), C₁-C₂₀-Acyl, -SO₃M, -SO₂N(R¹¹)M, -CO₂M, -PO₃M₂, -AsO₃M₂, -SiO₂M, -C(CF₃)₂OM (M = H, Li, Na oder K), wobei R¹¹ Wasserstoff, Fluor, Chlor, Brom, Iod, geradkettiges, verzweigtes oder cyclisches C₁-C₂₀-Alkyl, C₂-C₂₀-Alkenyl, C₂-C₂₀-Alkinyl, C₁-C₂₀-Carboxyat, C₁-C₂₀-Alkoxy, C₁-C₂₀-Alkenyloxy, C₁-C₂₀-Alkinyloxy, C₂-C₂₀-Alkoxycarbonyl, C₁-C₂₀-Alkylthio, C₁-C₂₀-Alkylsulfonyl, C₁-C₂₀-Alkylsulfinyl, Silyl und/oder deren Derivative, Aryl, C₁-C₂₀-Arylalkyl, C₁-C₂₀-Alkyl-aryl, Phenyl und/oder Biphenyl bedeutet. Vorzugsweise sind alle Gruppen R⁹ identisch.

Geeignete Phosphine (VII) sind beispielsweise Trimethyl-, Triethyl-, Tripropyl-, Triisopropyl-, Tributyl-, Triisobutyl-, Triisopentyl-, Trihexyl-, Tricyclohexyl-, Trioctyl-, Tridecyl-, Triphenyl-, Diphenylmethyl-, Phenyldimethyl-, Tri(o-tolyl)-, Tri(p-tolyl)-, Ethyldiphenyl-, Dicyclohexylphenyl-, 2-Pyridyldiphenyl-, Bis(6-methyl-2pyridyl)-phenyl-, Tri-(p-chlorophenyl)-, Tri-(p-methoxyphenyl)-, Diphenyl(2-sulfonatophenyl)phosphin; Kalium-, Natrium- und Ammoniumsalze von Diphenyl(3-sulfonatophenyl)phosphin, Bis(4,6-dimethyl-3-sulfonatophenyl)(2,4-dimethylphenyl)phosphin, Bis(3-sulfo-natophenyl)phenylphosphinen, Tris(4,6-dimethyl-3-sulfonatophenyl)phosphinen, Tris(2-sulfonatophenyl)phosphinen, Tris(3-sulfonatophenyl)phosphinen; 2-Bis(diphenylphosphinoethyl)trimethyl-ammoniumiodid, 2'-Dicyclohexylphosphino-2,6-dimethoxy-3-sulfonato-1,1'-biphenyl Natriumsalz, Trimethylphosphit und/oder Triphenylphosphit.

Besonders bevorzugt handelt es sich bei den Liganden um bidentate Liganden der allgemeinen Formel

R⁹M"-Z-M" R⁹ (VIII).

In dieser Formel repräsentieren M" unabhängig voneinander N, P, As oder Sb. Bevorzugt sind die beiden M" gleich und besonders bevorzugt steht M" für ein Phosphoratom.

Jede Gruppe R⁹ repräsentiert unabhängig voneinander die unter Formel (VII) beschrieben Reste. Vorzugsweise sind alle Gruppen R⁹ identisch.

Z stellt bevorzugt eine bivalente Überbrückungsgruppe dar, die wenigstens 1 Brückenatom enthält, wobei bevorzugt 2 bis 6 Brückenatome enthalten sind.

Brückenatome können ausgewählt werden aus C-, N-, O-, Si- und S-Atomen. Bevorzugt ist Z eine organische Überbrückungsgruppe, die wenigstens ein Kohlenstoffatom enthält. Bevorzugt ist Z eine organische Überbrückungsgruppe, die 1 bis 6 Brückenatome enthält, wovon wenigstens zwei Kohlenstoffatome sind, die unsubstituiert oder substituiert sein können.

Bevorzugte Gruppen Z sind -CH₂-, -CH₂-CH₂-, -CH₂-CH₂-CH₂-, -CH₂-CH(CH₃)-CH₂-, -CH₂-C(CH₃)₂-CH₂-, -CH₂-C(C₂H₅)-CH₂-, -CH₂-Si(CH₃)₂-CH₂-, -CH₂-O-CH₂-, -CH₂-CH₂-CH₂-CH₂-, -CH₂-CH(C₂H₅)-CH₂-, -CH₂-CH(n-Pr)-CH, -CH₂-CH(n-Bu)-CH₂-, unsubstituierte oder substituierte 1,2-Phenyl-, 1,2-Cyclohexyl-, 1,1'- oder 1,2-Ferrocenyl-Reste, 2,2'-(1,1'-Biphenyl)-, 4,5-Xanthen- und/oder Oxydi-2,1-phenylen-Reste.

Geeignete bidentate Phosphinliganden (VIII) sind beispielsweise 1,2-Bis(dimethyl-), 1,2-Bis(diethyl-), 1,2-Bis(dipropyl-), 1,2-Bis(diisopropyl-), 1,2-Bis(dibutyl-), 1,2-Bis(di-tert.-butyl-), 1,2-Bis(dicyclohexyl-) und 1,2-Bis(diphenylphosphino)ethan; 1,3-Bis(dicyclohexyl-), 1,3-Bis(diisopropyl-), 1,3-Bis(di-tert.-butyl-) und 1,3-Bis(diphenyl-phosphino)propan; 1,4-Bis-(diisopropyl-) und 1,4-Bis(diphenylphosphino)butan; 1,5-Bis(dicyclohexylphosphino)pentan; 1,2-Bis(di-tert.-butyl-), 1,2-Bis(di-phenyl-), 1,2-Bis(di-cyclohexyl-), 1,2-Bis(dicyclo-pentyl-), 1,3-Bis(di-tert.-butyl-), 1,3-Bis(diphenyl-), 1,3 Bis(di-cyclohexyl-) und 1,3-Bis(dicyclopentylphosphino)benzol; 9,9-Dimethyl-4,5-bis(diphenylphosphino)xanthen, 9,9-Dimethyl-4,5-bis(diphenyl-phosphino)-2,7-di-tert.-butylxanthen, 9,9-Dimethyl-4,5-bis(di-tert.-butylphos-phino)xanthen, 1,1'-Bis(diphenylphosphino)-ferrocen, 2,2'-Bis(diphenylphosphino)-1,1'-binaphthyl, 2,2'-Bis(di-p-tolylphosphino)-1,1'-binaphthyl, (Oxydi-2,1-phenylen)bis(diphenylphosphin), 2,5-(Di-isopropylphospholano)benzol, 2,3-O-Isopro-propyliden-2,3-dihydroxy-1,4-bis(diphenylphosphino)butan, 2,2'-Bis(di-tert.-butylphosphino)-1,1'-biphenyl, 2,2'-Bis(dicyclohexylphosphino)-1,1'-biphenyl, 2,2'-Bis(diphenylphosphino)-1,1'-biphenyl, 2-(Di-tert.-butylphosphino)-2'-(N,N-dimethylamino)biphenyl, 2-(Dicyclohexylphosphino)-2'-(N,N-dimethylamino)biphenyl, 2-(Diphenylphosphino)-2'-(N,N-dimethylamino)biphenyl, 2-(Diphenylphosphino)ethyl-amin, 2-[2-(Diphenylphosphino)ethyl]pyridin; Kalium-, Natrium- und Ammoniumsalze von 1,2-Bis(di-4-sulfonatophenylphosphino)-benzol, (2,2'-Bis [[bis(3-sulfonato-phenyl)phosphino]methyl]-4,4',7,7'-tetrasulfonato-1,1'-binapthyl, (2,2'-Bis[[bis(3-sulfonatophenyl)phosphino]methyl]-5,5'-tetrasulfonato-1,1'-biphenyl, (2,2'-Bis [[bis(3-sulfonatophenyl)phosphino]methyl]-1,1'-binapthyl, (2,2'-Bis[[bis(3-sulfonatophenyl)phos-phino]-methyl]-1,1'-biphenyl, 9,9-Dimethyl-4,5-bis(diphenylphosphino)-2,7-sulfonato-xanthen, 9,9-Dimethyl-4,5-bis(di-tert.-butylphosphino)-2,7-sulfonatoxanthen, 1,2-Bis(di-4-sulfonatophenylphosphino)-benzol, Meso-tetrakis(4-sulfonatophenyl)porphin, Meso-tetrakis(2,6-dichloro-3-sulfonatophenyl)porphin, Meso-tetrakis(3-sulfonatomesityl)porphin, Tetrakis(4-carboxyphenyl)porphin und 5,11,17,23-Sulfonato-25,26,27,28-tetrahydroxycalix[4]aren.

Zudem können die Liganden der Formel (VII) und (VIII) durch die Reste R⁹ und/oder die Überbrückungsgruppe an ein geeignetes Polymer oder anorganisches Substrat gebunden sein.

Das Katalysatorsystem hat ein Übergangsmetall-Ligand-Molverhältnis von 1:0,01 bis 1:100, bevorzugt von 1:0,05 bis 1:10 und insbesondere von 1:1 bis 1:4.

Bevorzugt erfolgen die Umsetzungen in den Verfahrensstufen a), b) c) und d) wahlweise in einer Atmosphäre, die weitere gasförmige Bestandteile wie zum Beispiel Stickstoff, Sauerstoff, Argon, Kohlendioxid enthält; die Temperatur beträgt -20 bis 340 °C, insbesondere 20 bis 180 °C und der Gesamtdruck von 1 bis 100 bar.

Die Isolierung der Produkte und/oder des Übergangsmetalls und/oder der Übergangsmetallverbindung und/oder Katalysatorsystems und/oder des Liganden und/oder der Edukte nach den Verfahrensstufen a), b) c) und d) erfolgt wahlweise durch Destillation oder Rektifikation, durch Kristallisation oder Fällen, durch Filtration oder Zentrifugieren, durch Adsorption oder Chromatographie oder anderen bekannten Methoden.

Erfindungsgemäß werden Lösungsmittel, Hilfsmittel und ggf. andere flüchtige Bestandteile durch z. B. Destillation, Filtration und/oder Extraktion abgetrennt.

Bevorzugt erfolgt die Umsetzungen in den Verfahrensstufen a), b) c), und d) wahlweise in Absorptionskolonnen, Sprühtürmen, Blasensäulen, Rührkesseln, Reiselbettreaktor, Strömumgsrohren, Schlaufenreaktoren und/oder Knetern.

Geeignete Mischorgane sind z. B. Anker-, Blatt-, MIG-, Propeller-, Impeller-, Turbinen-, Kreuz-Rührer, Dispergierscheiben, Hohl-(Begasungs-)-Rührer, Rotor-Stator-Mischer, statische Mischer, Venturi-Düsen und/oder Mammutpumpen.

Bevorzugt erfahren die Reaktionslösungen/-mischungen dabei eine Mischintensität, die einer Rotations-Reynolds-Zahl von 1 bis 1.000.000, bevorzugt von 100 bis 100.000 entspricht.

Bevorzugt erfolgt eine intensive Durchmischung der jeweiligen Reaktionspartner etc. unter einem Energieeintrag von 0,080 bis 10 kW/m³, bevorzugt 0,30 - 1,65 kW/m³.

Bevorzugt wirkt der jeweilige Katalysator A oder C während der Umsetzung homogen und/oder heterogen. Daher wirkt der jeweils heterogen wirkende Katalysator während der Umsetzung als Suspension oder an eine feste Phase gebunden.

Bevorzugt wird der jeweilige Katalysator A oder C vor der Umsetzung und/oder zu Beginn der Umsetzung und/oder während der Umsetzung in situ generiert. Bevorzugt erfolgt die jeweilige Umsetzung in einem Lösungsmittel als Ein-Phasen-System in homogener oder heterogener Mischung und/oder in der Gasphase.

Wird ein Mehr-Phasen-System verwendet kann zusätzlich ein Phasentransferkatalysor eingesetzt werden.

Die erfindungsgemäßen Reaktionen können in flüssiger Phase, in der Gasphase oder auch in überkritischer Phase durchgeführt werden. Dabei wird der jeweilige Katalysator A oder C bei Flüssigkeiten vorzugsweise homogen oder als Suspension eingesetzt, während bei Gasphasen- oder überkritischer Fahrweise eine Festbettanordnung von Vorteil ist.

Geeignete Lösungsmittel sind Wasser, Alkohole wie z. B. Methanol, Ethanol, i-Propanol, n-Propanol, n-Butanol, i-Butanol, t-Butanol, n-Amylalkohol, i-Amylalkohol, t-Amylalkohol, n-Hexanol, n-Octanol, i-Octanol, n-Tridecanol, Benzylalkohol etc. Bevorzugt sind weiterhin Glycole wie z.B. Ethylenglycol, 1,2-Propandiol, 1,3-Propandiol, 1,3-Butandiol, 1,4-Butandiol, Diethylenglycol etc.; aliphatische Kohlenwasserstoffe wie Pentan, Hexan, Heptan, Octan, und Petrolether, Petroleumbenzin, Kerosin, Petroleum, Paraffinöl etc.; aromatische Kohlenwasserstoffe wie Benzol, Toluol, Xylol, Mesitylen, Ethylbenzol, Diethylbenzol etc.; Halogenkohlenwasserstoffe wie Methylenchlorid, Chloroform, 1,2-Dichloroethan, Chlorobenzol, Tetrachlorkohlenstoff, Tetrabromoethylen etc.; alicyclische Kohlenwasserstoffe wie Cyclopentan, Cyclohexan und Methylcyclohexan etc.; Ether wie Anisol (Methylphenylether), t-Butylmethylether, Dibenzylether, Diethylether, Dioxan, Diphenylether, Methylvinylether, Tetrahydrofuran, Triisopropylether etc.; Glycolether wie Diethylenglycoldiethylether, Diethylenglycoldimethylether (Diglyme), Diethylenglycolmonobutylether, Diethylenglycolmonomethylether, 1,2-Dimethoxy-ethan (DME Monoglyme), Ethylenglycolmonobutylether, Triethylenglycoldimethylether (Triglyme), Triethylenglycolmonomethylether etc.; Ketone wie Aceton, Diisobutylketon, Methyl-n-propylketon; Methylethylketon, Methyl-i-butylketon etc; Ester wie Methylformat, Methylacetat, Ethylacetat, n-Propylacetat und n-Butylacetat etc.; Carbonsäuren wie Ameisensäure, Essigsäure, Propionsäure, Buttersäure etc.; einzeln oder in Kombination miteinander.

Geeignete Lösungsmittel sind auch die eingesetzten Olefine und Phosphinsäurequellen. Diese bieten Vorteile in Form einer höheren Raum-Zeit-Ausbeute.

Bevorzugt wird die Umsetzung unter dem eigenen Dampfdruck des Olefins und/oder des Lösungsmittels durchgeführt.

Bevorzugt sind R¹, R², R³, R⁴ des Olefins (IV) gleich oder verschieden und bedeuten, unabhängig voneinander, H, Methyl, Ethyl, n-Propyl, Isopropyl, n-Butyl, Isobutyl, tert.-Butyl und/oder Phenyl.

Bevorzugt werden auch funktionalisierte Olefine wie Allylisothiocyanat, Allylmethacrylat, 2-Allylphenol, N-Allylthioharnstoff, 2-(Allylthio)-2-thiazolin, Allyltrimethylsillan, Allylacetat, Allylacetoacetat, Allylalkohol, Allylamin, Allylbenzol, Allylcyanid, Allyl-(cyanacetat), Allylanisol, trans-2-Pentenal, cis-2-Pentennitril, 1-Penten-3-ol, 4-Penten-1-ol, 4-Penten-2-ol, trans-2-Hexenal, trans-2-Hexen-1-ol, cis-3-Hexen-1-ol, 5-Hexen-1-ol, Styrol, -Methylstyrol, 4-Methylstyrol, Vinylacetat, 9-Vinylanthracen, 2-Vinylpyridin, 4-Vinylpyridin und 1-Vinyl-2-pyrrolidon eingesetzt.

Bevorzugt erfolgt die Umsetzung bei einem Partialdruck des Olefins von 0,01 - 100 bar, besonders bevorzugt bei einem Partialdruck des Olefins von 0,1 - 10 bar.

Bevorzugt erfolgt die Umsetzung in einem Phosphinsäure-Olefin-Molverhältnis von 1:10.000 bis 1:0,001, besonders bevorzugt im Verhältnis von 1:30 bis 1:0,01.

Bevorzugt erfolgt die Umsetzung in einem Phosphinsäure-Katalysator-Molverhältnis von 1:1 bis 1:0,00000001, besonders bevorzugt bei 1:0,01 bis 1:0,000001.

Bevorzugt erfolgt die Umsetzung in einem Phosphinsäure-Lösungsmittel-Molverhältnis von 1:10.000 bis 1:0, besonders bevorzugt bei 1:50 bis 1:1.

Ein erfindungsgemäßes Verfahren zur Herstellung von Verbindungen der Formel (II) ist dadurch gekennzeichnet, dass man eine Phosphinsäurequelle mit Olefinen in Gegenwart eines Katalysators umsetzt und das Produkt (II) (Alkylphosphonigsäure bzw. -salze, -ester) von Katalysator, Übergangsmetall bzw. Übergangsmetallverbindung, Ligand, Komplexbildner, Salzen und Nebenprodukten befreit wird.

Erfindungsgemäß wird der Katalysator, das Katalysatorsystem, das Übergangsmetall und/oder die Übergangsmetallverbindung abgetrennt durch Zugabe eines Hilfsmittels 1 und Entfernen des Katalysators, des Katalysatorsystems, des Übergangsmetalls und/oder der Übergangsmetallverbindung durch Extraktion und/oder Filtration.

Erfindungsgemäß wird der Ligand und/oder Komplexbildner durch Extraktion mit Hilfsmittel 2 und/oder Destillation mit Hilfsmittel 2 abgetrennt.

Hilfsmittel 1 ist bevorzugt Wasser und/oder mindestens ein Vertreter der Familie der Metallfänger (Metal Scavenger). Bevorzugte Metallfänger sind Metalloxide wie etwa Aluminiumoxid, Siliciumdioxid, Titandioxid, Zirkoniumdioxid, Zinkoxid, Nickeloxid, Vanadiumoxid, Chromoxid, Magnesiumoxid, Celite^{®}, Kieselgur; Metallcarbonate wie etwa Bariumcarbonat, Calciumcarbonat, Strontiumcarbonat; Metallsulfate wie etwa Bariumsulfat, Calciumsulfat, Strontiumsulfat; Metallphosphate wie etwa Aluminium-phosphat, VanadiumphosphatM Metallcarbide wie etwa Siliconcarbid; Metallaluminate wie etwa Calciumaluminat; Metallsilikate wie etwa Aluminiumsilikat, Kreiden, Zeolithe, Bentonit, Montmorillonit, Hectorit; funktionalisierte Silikate, funktionalisierte Silikagele wie etwa SiliaBond^{®}, QuadraSil™; funktionalisierte Polysiloxane wie etwa Deloxan^{®}; Metallnitride, Kohle, Aktivkohle, Mullite, Bauxite, Antimonite, Scheelite, Perovskite, Hydrotalcite, funktionalisierte und unfunktionalisierte Cellulose, Chitosan, Keratin, Heteropolyanionen, lonentauscher wie etwa Amberlite™, Amberjet™, Ambersep™, Dowex^{®}, Lewatit^{®}, ScavNet^{®}; funktionalisierte Polymere wie etwa Chelex^{®}, Quadra-Pure™, Smopex^{®}, PolyOrgs^{®}; polymergebundene Phosphane, Phosphanoxide, Phosphinate, Phosphonate, Phosphate, Amine, Ammoniumsalze, Amide, Thioamide, Harnstoffe, Thioharnstoffe, Triazine, Imidazole, Pyrazole, Pyridine, Pyrimidine, Pyrazine, Thiole, Thiolether, Thiolester, Alkohole, Alkoxide, Ether, Ester, Carbonsäuren, Acetate, Acetale, Peptide, Hetarene, Polyethylenimin/Siliciumdioxid und/oder Dendrimere.

Bevorzugt wird Hilfsmittel 1 in Mengen zugesetzt, die einer 0,1 - 40 gew.-%igen Beladung des Metalls auf dem Hilfsmittel 1 entsprechen.

Bevorzugt wird Hilfsmittel 1 bei Temperaturen von 20 - 90 °C eingesetzt.

Bevorzugt beträgt die Verweilzeit von Hilfsmittel 1 0,5 - 360 Minuten.

Hilfsmittel 2 ist bevorzugt das vorgenannte, erfindungsgemäße Lösungsmittel, wie sie bevorzugt in der Verfahrensstufe a) eingesetzt werden.

Die Veresterung der mono-aminofunktionalisierten Dialkylphosphinsäure (III) bzw. der mono-funktionalisierten Dialkylphosphinsäure (VI) bzw. der Alkylphosphonigsäuredrivate (II) sowie der Phosphinsäurequelle (I) zu den entsprechenden Estern kann beispielsweise durch Umsetzung mit höhersiedenden Alkoholen unter Entfernung des gebildeten Wassers durch Azeotropdestillation oder durch Umsetzung mit Epoxiden (Alkylenoxiden) erreicht werden.

Bevorzugt wird hierbei nach Schritt a) die Alkylphosphonigsäure (II) mit einem Alkohol der allgemeinen Formel M-OH und/oder M'-OH oder durch Umsetzung mit Alkylenoxiden, wie nachfolgend angeführt, direkt verestert.

Bevorzugt sind M-OH primäre, sekundäre oder tertiäre Alkohole mit einer Kohlenstoffkettenlänge von C₁-C₁₈. Besonders bevorzugt sind Methanol, Ethanol, Propanol, Isopropanol, n-Butanol, 2-Butanol, tert.-Butanol, Amylalkohol und/oder Hexanol.

Bevorzugt sind M'-OH Ethylenglykol, 1,2-Propylen-glykol, 1,3-Propylenglykol, 1,4-Butandiol, 2,2-Dimethylpropan-1,3-diol, Neopentyl-glykol, 1,6-Hexandiol, 1,4-Cyclohexan-dimethanol, Glycerin, Trishydroxymethylethan, Trishydroxymethylpropan, Pentaerythrit, Sorbit, Mannit, α-Naphthol, Polyethylenglykole, Polypropylenglykole und/oder EO-PO-Blockpolymere.

Geeignet sind als M-OH und M'-OH auch ein- oder mehrwertige, ungesättigte Alkohole mit einer Kohlenstoffkettenlänge von C₁-C₁₈, etwa n-Buten-2-ol-1, 1,4-Butendiol und Allylalkohol.

Geeignet sind als M-OH und M'-OH auch Umsetzungsprodukte von einwertigen Alkoholen mit einem oder mehreren Molekülen von Alkylenoxiden, bevorzugt mit Ethylenoxid und/oder 1,2-Propylenoxid. Bevorzugt sind 2-Methoxyethanol, 2-Ethoxyethanol, 2-n-Butoxy-ethanol, 2-(2'-Ethyl-hexyloxy)-ethanol, 2-n-Dodecoxy-ethanol, Methyldiglykol, Ethyldiglykol, Isopropyldiglykol, Fettalkoholpolyglykolether und Arylpolyglykolether.

Bevorzugt sind M-OH und M'-OH auch Umsetzungsprodukte von mehrwertigen Alkoholen mit einem oder mehreren Molekülen Alkylenoxid, insbesondere Diglykol und Triglykol sowie Addukte von 1 bis 6 Molekülen Ethylenoxid oder Propylenoxid an Glycerin, Trishydroxymethylpropan oder Pentaerythrit.

Als M-OH und M'-OH können auch Umsetzungsprodukte von Wasser mit einem oder mehreren Molekülen Alkylenoxid eingesetzt werden. Bevorzugt sind Polyethylenglykole und Poly-1,2-propylenglykole verschiedener Molekulargrößen mit einem mittleren Molgewicht von 100-1000 g/mol, besonders bevorzugt von 150-350 g/mol.

Bevorzugt sind als M-OH und M'-OH auch Umsetzungsprodukte von Ethylenoxid mit Poly-1,2-propylen-glykolen oder Fettalkoholpropylenglykole; ebenso Umsetzungsprodukte von 1,2-Propylenoxid mit Polyethylenglykolen oder Fettalkoholethoxylaten. Bevorzugt sind solche Umsetzungsprodukte mit einem mittleren Molgewicht von 100-1000 g/mol, besonders bevorzugt von 150-450 g/mol.

Einsetzbar sind als M-OH und M'-OH auch Umsetzungsprodukte von Alkylenoxiden mit Ammoniak, primären oder sekundären Aminen, Schwefelwasserstoff, Merkaptanen, Sauerstoffsäuren des Phosphors und C₂-C₆-Dicarbonsäuren. Geeignete Umsetzungsprodukte von Ethylenoxid mit Stickstoffverbindungen sind Triethanolamin, Methyldiethanolamin, n-Butyldiethanolamin, n-Dodecyl-diethanolamin, Dimethylethanolamin, n-Butyl-methylethanolamin, Di-n-butyl-ethanolamin, n-Dodecylmethyl-ethanolamin, Tetrahydroxyethyl-ethylendiamin oder Pentahydroxyethyl-diethylentriamin.

Bevorzugte Alkylenoxide sind Ethylenoxid, 1,2-Propylenoxid, 1,2-Epoxybutan, 1,2-Epoxyethylbenzol, (2,3-Epoxypropyl)benzol, 2,3-Epoxy-1-propanol und 3,4-Epoxy-1-buten.

Geeignete Lösungsmittel sind die in Verfahrensschritt a) genannten Lösungsmittel und auch die eingesetzten Alkohole M-OH, M'-OH und die Alkylenoxide. Diese bieten Vorteile in Form einer höheren Raum-Zeit-Ausbeute.

Bevorzugt wird die Umsetzung unter dem eigenen Dampfdruck des eingesetzten Alkohols M-OH, M'-OH und Alkylenoxids und/oder des Lösungsmittels durchgeführt.

Bevorzugt erfolgt die Umsetzung bei einem Partialdruck des eingesetzten Alkohols M-OH, M'-OH und Alkylenoxids von 0,01 - 100 bar, besonders bevorzugt bei einem Partialdruck des Alkohols von 0,1 - 10 bar.

Bevorzugt wird die Umsetzung bei einer Temperatur von -20 bis 340 °C durchgeführt, besonders bevorzugt bei einer Temperatur von 20 bis 180 °C. Bevorzugt erfolgt die Umsetzung bei einem Gesamtdruck von 1 bis 100 bar.

Bevorzugt erfolgt die Umsetzung in einem Molverhältnis der Alkohol- bzw. Alkylenoxidkomponente zu der Phosphinsäurequelle (I) bzw. Alkylphosphonigsäure (II) bzw. mono-funktionalisierter Dialkylphosphinsäure (VI) bzw. mono-aminofunktionalisierter Dialkylphosphinsäure (III) von 10.000:1 bis 0,001:1, besonders bevorzugt im Verhältnis von 1000:1 bis 0,01:1.

Bevorzugt erfolgt die Umsetzung in einem Molverhältnis der Phosphinsäurequelle (I) bzw. Alkylphosphonigsäure (II) bzw. mono-funktionalisierter Dialkylphosphinsäure (VI) bzw. mono-aminofunktionalisierter Dialkylphosphinsäure (III) zum Lösungsmittel von 1:10.000 bis 1:0, besonders bevorzugt in einem Phosphinsäure-Lösungsmittel-Molverhältnis von 1:50 bis 1:1.

Besonders bevorzugte Katalysatoren B, wie sie in der Verfahrensstufe b) eingesetzt werden, sind Peroxo-Verbindungen wie Peroxomonoschwefelsäure, Kaliummonopersulfat (Kaliumperoxomonosulfat), Caroat(TM), Oxone(TM), Peroxodischwefelsäure, Kaliumpersulfat (Kaliumperoxodisulfat), Natriumpersulfat (Natriumperoxodisulfat), Ammoniumpersulfat (Ammoniumperoxodisulfat).

Besonders bevorzugte Katalysatoren B sind Verbindungen, die im Lösemittelsystem Peroxide bilden können wie Natriumperoxid, -hydrate, Lithiumperoxid, -hydrate, Calciumperoxid, Strontiumperoxid, Bariumperoxid, Magnesiumperoxid, Zinkperoxid, Kaliumhyperoxid, -hydrate, Natriumperoxoborat, -hydrate, Kaliumperoxoboratperoxohydrat, Magnesiumperoxoborat, Calciumperoxoborat, Bariumperoxoborat, Strontiumperoxoborat, Kaliumperoxoborat, Peroxomonophosphorsäure, Peroxodiphosphorsäure, Kaliumperoxodiphosphat, Ammoniumperoxodiphosphat, Kaliumammoniumperoxodiphosphate (Doppelsalz), Natriumcarbonatperoxohydrat, Harnstoffperoxohydrat, Ammoniumoxalatperoxid, Bariumperoxidperoxohydrat, Bariumperoxidperoxohydrat, Calciumhydrogenperoxide, Calciumperoxidperoxohydrat, Ammoniumtriphosphatdiperoxophosphathydrat, Kaliumfluoridperoxohydrat, Kaliumfluoridtriperoxohydrat, Kaliumfluoriddiperoxohydrat, Natriumpyrophosphatdiperoxohydrat, Natriumpyrophosphatdiperoxohydratoctahydrat, Kaliumacetatperoxohydrat, Natriumphosphatperoxohydrat, Natriumsilicatperoxohydrat.

Bevorzugte Katalysatoren B sind Wasserstoffperoxid, Perameisensäure, Peressigsäure, Benzoylperoxid, Di-tert-butylperoxid, Dicumylperoxid, 2,4-Dichlorobenzoylperoxid, Decanoylperoxid, Laurylperoxid, Cumolhydroperoxid, Pinenhydroperoxid, p-Menthanhydroperoxid, tert-Butylhydroperoxid, Acetylacetonperoxid, Methylethylketonperoxid, Bernsteinsäureperoxid, Dicetylperoxydicarbonat, tert-Butylperoxyacetat, tert-Butylperoxymaleinsäure, tert-Butylperoxybenzoat, Acetylcyclohexylsulfonylperoxid.

Bevorzugte Katalysatoren B sind wasserlösliche Azo-Verbindungen. Besonders bevorzugt sind Azoinitiatoren wie VAZO^{®} 52 2,2'-Azobis(2,4-dimethyl-valeronitril), VAZO^{®} 64 (Azo-bis-(isobutyronitril), AIBN), VAZO^{®} 67 2,2'-Azobis(2-methylbutyronitril), VAZO^{®} 88 1,1'-Azobis(cyclohexan-1-carbonitril), VAZO^{®} 68 der Fa. Dupont-Biesteritz, V-70 2,2'-Azobis(4-methoxy-2,4-dimethylvaleronitril), V-65 2,2'-Azobis(2,4-dimethylvaleronitril), V-601 Dimethyl 2,2'-azobis(2-methylpropionat), V-59 2,2'-Azobis(2-methylbutyronitril), V-40 1,1'-Azobis(cyclohexan-1-carbonitril), VF-096 2,2'-Azobis[N-(2-propenyl)-2-methylpropionamid], V-30 1-[(cyano-1-methylethyl)azo]formamid, VAm-110 2,2'-Azobis(N-butyl-2-methyl-propionamid), VAm-111 2,2'-Azobis(N-cyclohexyl-2-methylpropionamid), VA-046B 2,2'-Azobis[2-(2-imidazolin-2-yl)propandisulfat-dihydrate, VA-057 2,2'-Azobis[N-(2-carboxyethyl)-2-methylpropion-amidin]tetrahydrat, VA-061 2,2'-Azobis[2-(2-imidazolin-2-yl)propan], VA-080 2,2'-Azobis{2-methyl-N-[1,1-bis(hydroxymethyl)-2-hydroxyethyl] propionamid, VA-085 2,2'-Azobis{2-methyl-N-[2-(1-hydroxybuthyl)]propionamid}, VA-086 2,2'-Azobis[2-methyl-N-(2-hydroxyethyl)-propionamid] von Wako Chemicals.

Geeignet sind auch Azoinitiatoren wie 2-tert-Butylazo-2-cyanopropan, Dimethylazodiiso-butyrat, Azodiisobutyronitril, 2-tert-Butylazo-1-cyanocyclohexan, 1-tert-Amylazo-1-cyanocyclohexan. Weiterhin sind bevorzugt Alkylperketale wie 2,2-Bis-(tert-butylperoxy)butan, Ethyl-3,3-bis(tert-butylperoxy)butyrat, 1,1-Di-(tert-butylperoxy)cyclohexan.

Bevorzugte Katalysatoren B sind auch Metalle, Metallhydride und Metallalkoholate wie zum Beispiel Lithium, Lithiumhydrid, Lithiumaluminiumhydrid, Methyllithium, Butyllithium, tert-Butyllithium, Lithiumdiisopropylamid, Natrium, Natriumhydrid, Natriumborhydrid, Natriummethanolat, Natriumethanolat oder Natriumbutylat, Kaliummethanolat, Kaliumethanolat oder Kaliumbutylat.

Bevorzugt wird der Katalysator B in Mengen von 0,05 bis 5 mol-% bezüglich der jeweiligen Acrylnitrile (V) eingesetzt.

Bevorzugt wird der Katalysator B in Mengen von 0,001 bis 10 mol-%, bezogen auf die phosphorhaltige Verbindung, eingesetzt.

Geeignete Lösungsmittel sind die, wie sie weiter vorne in Verfahrensstufe a) eingesetzt werden.

Bevorzugt wird der Katalysator B mit einer Geschwindigkeit von 0,01 bis 10 mol-% Katalysator pro Stunde, bezogen auf die phosphorhaltige Verbindung, zudosiert.

Bevorzugt erfolgt die Umsetzung der Alkylphosphonigsäuren (II) mit dem Acrylnitril (V) bei einer Temperatur von 0 bis 250 °C, besonders bevorzugt bei 20 bis 200 °C und insbesondere bei 50 bis 150 °C.

Bevorzugt besteht die Atmosphäre bei der Umsetzung mit dem Acrylnitril (V) zu 50 bis 99,9 Gew.-% aus Bestandteilen des Lösungsmittels und Acrylnitril (V), bevorzugt 70-95 %.

Bevorzugt erfolgt die Umsetzung während des Zusatz von Acrylnitril (V) bei einem Druck von 1 -20 bar.

In einer weiteren Ausführungsform des Verfahrens wird das nach Verfahrensstufe a) und/oder b) erhaltene Produktgemisch aufgearbeitet.

In einer weiteren Ausführungsform des Verfahrens wird das nach Verfahrensstufe a) erhaltene Produktgemisch aufgearbeitet und danach die nach Verfahrensstufe b) erhaltenen mono-funktionalisierten Dialkylphosphinsäuren und/oder deren Ester und Alkalisalze in Verfahrensstufe c) umgesetzt.

Gegenstand der Erfindung ist zudem ein Verfahren in Schritt b) zur kontinuierlichen Herstellung von mono-funktionalisierten Dialkylphosphinsäureestern (VI) durch Umsetzung von Alkylphosphonigsäureestern (II) mit Acrylnitril (V) in Gegenwart von Metallalkoholaten (Katalysator B), welches dadurch gekennzeichnet ist, dass man
a) in einem zur Kreislaufführung des Reaktionsgemisches ausgebildeten, in sich geschlossenen und mit Kühleinrichtungen sowie Überlauf versehenen Reaktor eine dem Reaktorvolumen entsprechende Volumenmenge des herzustellenden mono-funktionalisierten Dialkylphosphinsäureestern (VI), gegebenenfalls im Gemisch mit dem Metallalkoholat entsprechenden Alkohol als Lösungsmittel, vorlegt und im Kreislauf führt; dass man
b) in den Reaktor kontinuierlich den Alkylphosphonigsäureester (II), den Acrylnitril (V) sowie eine alkoholische Lösung des Metallalkoholats unter Kühlung des im Kreislauf geführten Reaktorinhaltes einleitet und bei einer Temperatur von etwa Null bis 80 °C im Verlauf von etwa 5 - 120 Minuten umsetzt, wobei das Molverhältnis des Alkylphos-phonigsäureesters (II) zu dem Acrylnitril (V) etwa 1 zu 0,9 - 2 und die Menge des Metallalkoholats, bezogen auf den Alkylphosphonigsäureester (II), etwa 0,1 bis 5 mol% beträgt; und dass man
c) über den Überlauf des Reaktors kontinuierlich ein das Verfahrensprodukt enthaltendes Gemisch abzieht und aus dem Gemisch den mono-funktionalisierten Dialkylphosphinsäureester (VI) durch Destillation abtrennt.

Eine bevorzugte Ausführungsform des erfindungsgemäßen Verfahrens besteht darin, dass man die Umsetzung der Reaktionskomponenten bei einer Temperatur von 20 bis 50 °C durchführt. Die Beschickung des Reaktors mit den

Reaktionskomponenten und der Katalysatorlösung kann beispielsweise derart erfolgen, dass man
a) den Alkylphosphonigsäureester (II), das Acrylnitril (V) sowie die alkoholische Lösung des Metallalkoholats getrennt in den Reaktor einleitet
b) ein Gemisch des Alkylphosphonigsäureesters (II) mit dem Acrylnitril (V), getrennt von der alkoholischen Lösung des Metallalkoholats, in den Reaktor einleitet oder
c) ein Gemisch des Alkylphosphonigsäureesters (II) mit der alkoholischen Lösung des Metallalkoholats, getrennt von dem Acrylnitril (V), in den Reaktor einleitet.

Weiterhin ist es zweckmäßig, wenn der als Lösungsmittel eingesetzte Alkohol und/oder die alkoholische Komponente des Metallalkoholats der alkoholischen Komponente des Alkylphosphonigsäureesters (II) entspricht.

Im Falle des Einsatzes von Alkylphosphonigsäureester (II) und der alkoholischen Metallalkoholatlösung mit unterschiedlichen alkoholischen Komponenten wird ein Mischprodukt als Verfahrensprodukt erhalten.

Schließlich bestehen bevorzugte Merkmale der Erfindung darin, dass das Molverhältnis von Alkylphosphonigsäureester (II) zu Acrylnitril (V) 1 zu 1 - 1,3, die Menge an Katalysator B bezogen auf den Alkylphosphonigsäureester (II) 1 - 5 mol-% und die Menge des als Lösungsmittel eingesetzten Alkohols 0,1 - 1000 Mol pro Mol Alkylphosphonigsäureester (II) beträgt.

Gemäß der erfindungsgemäßen Verfahrensweise wird es ermöglicht, in technischem Maßstab kontinuierlich mono-funktionalisierten Dialkylphosphinsäureester (VI) in einer bisher nicht erreichten Ausbeute von etwa 90 % der Theorie herzustellen.

Die in dem Schritt c) beschriebene Umsetzung wird durch Hydrierung der mono-funktionalisierten Dialkylphosphinsäure, deren Salze und Ester (VI) mittels selektiver Hydrierung durch ein Reduktionsmittel oder katalytisch durch Wasserstoff in Gegenwart eines Katalysators C und ggf. eines Amins und eines Promotors erreicht.

Bevorzugte Reduktionsmittel stellen Metallhydride, Borhydride, Metallborhydride, Aluminiumhydride, Metallaluminiumhydride dar. Beispiele bevorzugter Reduktionsmittel sind Decaboran, Diboran, Diisobutylaluminiumhydrid, Dimethylsulfidboran, Dimethylsulfidboran, Kupferhydrid, Lithiumaluminiumhydrid, Natrium-bis(2-methoxyethoxy)aluminumhydrid, Natriumborhydrid, Natriumtriacetoxyborhydrid, Nickelborhydrid, Tributylzinnhydrid, Zinnhydrid.

Bevorzugt erfolgt die Umsetzung in einem Dialkylphosphinsäure-Reduktionsmittel-Molverhältnis von 1:10 bis 1:0,1, besonders bevorzugt in einem Dialkylphosphinsäure-Reduktionsmittel-Molverhältnis von 1:2 bis 1:0,25.

Die bevorzugte katalytische Hydrierung erfolgt mittels Wasserstoff in Gegenwart eines Katalysators C und ggf. eines Amins und/oder eines Promotors.

Der Katalysator C, wie er für den Verfahrensschritt c) für die Umsetzung des mono-funktionalisierten Dialkylphosphinsäurederivats (VI) mit Wasserstoff und ggf. eines Promotors zu den mono-aminofunktionalisierten Dialkylphosphinsäurederivaten (III), kann bevorzugt der Katalysator A sein.

Zusätzlich zu den unter Katalysator A aufgelisteten Liganden können auch die folgenden Verbindungen eingesetzt werden:
Diphenyl-p-, -m- oder -o-tolylphosphit, Di-p-, -m- oder -o-tolylphenylphosphit, m-Tolyl-o-tolyl-p-tolylphosphit, o-Tolyl-p- oder -m-tolylphenylphosphit, Di-p-tolyl-m-oder -o-tolylphosphit, Di-m-tolyl-p- oder -o-tolylphosphit, Tri-m-, -p- oder -o-tolylphosphit, Di-o-tolyl-m- oder -p-tolylphosphit; Tris(2-ethylhexyl)-, Tribenzyl-, Trilauryl-, Tri-n-butyl-, Triethyl-, Tri-neo-pentyl-, Tri-i-propyl-, Tris(2,4-di-t-butylphenyl)-, tris(2,4-di-tert-butylphenyl)-, Diethyltrimethyl-silyl-, Diisodecylphenyl-, Dimethyltrimethylsilyl-, Triisodecyl-, Tris(tert-butyldimethylsilyl)-, Tris(2-chloroethyl-, Tris(1,1,1,3,3,3-hexafluoro-2-propyl)-, Tris(nonylphenyl)-, Tris(2,2,2-trifluoroethyl)-, Tris(trimethylsilyl)-, 2,2-Dimethyltrimethylen-phenyl-, Trioctadecyl-, Triimethylolpropan-, Benzyldiethyl-, (R)-Binaphthylisobutyl-, (R)-Binaphthylcyclopentyl-, (R)-Binaphthylisopropyl-, Tris(2-tolyl)-, Tris(nonylphenyl)- und Methyldiphenylphosphit; (11aR)-(+)-10,11,12,13-Tetrahydro-diindeno[7,1-de:1',7'-fg][1,3,2]dioxaaphosphocin-5-phenoxy, 4-Ethyl-2,6,7-trioxa-1-phosphabicyclo[2.2.2]octan, (11bR,11'bR)-4,4'-(9,9-Dimethyl-9H-xanthene-4,5-diyl)bis-dinaphtho[2,1-d:1',2'-f][1,3,2]dioxaphosphepin, (11bR, 11'bR)-4,4'-(Oxydi-2,1-phenylene)bis-dinaphtho[2,1-d:, 1',2'-f][1,3,2]dioxa-phosphepin, (11bS,11'bS)-4,4'-(9,9-Dimethyl-9H-xanthene-4,5-diyl)bis-dinaphtho[2,1-d:1',2'-f][1,3,2]dioxa-phosphepin, (11bS, 11'bS)-4,4'-(Oxydi-2,1-phenylene)bis-dinaphtho[2,1-d: 1', 2'-f][1,3,2]dioxaphosphepin, 1,1'Bis[(11bR)- und 1,1'Bis[(11bS)-dinaphtho[2,1-d:1',2'-f][1,3,2]dioxaphos-phepin-4-yl]ferrocen; Dimethylphenyl-, Diethylmethylp- und Diethylphenyl- und Diisopropylphenylphosphonit; Dimethylphenyl-, Diisopropylphenyl-, Ethyldiphenyl- und Methyldiphenylphosphinit.

Zusätzlich zu den unter Katalysator A aufgelisteten bidentaten Liganden können auch die folgenden Verbindungen eingesetzt werden:
1,2-Bis(diadamantylphosphinomethyl)benzol, 1,2-Bis(di-3,5-dimethyladamantyl-phosphinomethyl)benzol, 1,2-Bis(di-5-tert-butyladamantaylphosphinomethyl)benzol, 1,2-Bis(1-adamantyl tert-butyl-phosphinomethyl)benzol, 1-(Di-tertbutylphosphino-methyl)- und
1-((Diadamantylphosphinomethyl)-2-(phosphaadamantylphosphino-methyl)benzol, 1,2-Bis(di-tert-butylphosphinomethyl)-ferrocen, 1,2-Bis(dicyclohexyl-phosphinomethyl)-ferrocen, 1,2-Bis(di-isobutylphosphinomethyl)ferrocen, 1,2-Bis(dicyclopentyl-phosphinomethyl)ferrocen, 1,2-Bis-(diethylphosphinomethyl)-ferrocen, 1,2-Bis(diisopropylphosphinomethyl)ferrocen, 1,2-Bis(dimethylphosphinomethyl)ferrocen, 9,9-Dimethyl-4,5-bis(diphenoxyphosphin)xanthen, 9,9-Dimethyl-4,5-bis(di-p-methylphenoxyphosphin)xanthen, 9,9-Dimethyl-4,5-bis(di-o-methylphenoxyphosphin)xanthen, 9,9-Dimethyl-4,5-bis(di-1,3,5-trimethylphenoxy-phosphin)xanthen, 9,9-Dimethyl-4,5-bis(diphenoxyphosphin)-2,7-di-tert.-butyl-xanthen, 9,9-Dimethyl-4,5-bis(di-o-methylphenoxyphosphin)-2,7-di-tert.-butyl-xanthen, 9,9-Dimethyl-4,5-bis(di-p-methylphenoxyphosphin)-2,7-di-tert.-butyl-xanthen, , 9,9-Dimethyl-4,5-bis(di-1,3,5-trimethylphenoxyphosphin)-2,7-di-tert.-butyl-xanthen, 1,1'-Bis(diphen-oxyphosphin)ferrocen, 1,1'-Bis(di-o-methylphenoxy) ferrocen, 1,1'-Bis(di-p-methyl-phenoxyphosphin)ferrocen, 1,1'-Bis(di-1,3,5-trimethylphenoxyphosphin)ferrocen, 2,2'-Bis(diphenoxyphosphin)-1,1'-binaphthyl, 2,2'-Bis(di-o-methylphenoxyphosphin)-1,1'-binaphthyl, 2,2'-Bis(di-p-methylphenoxy-phosphin)-1,1'-binaphthyl, 2,2'-Bis(di-1,3,5-trimethylphenoxy-phosphin)-1,1'-binaphthyl, (Oxydi-2,1-phenylen)bis(diphen-oxyphosphin), (Oxydi-2,1-phenylen)bis(di-o-methylphenoxyphosphin), (Oxydi-2,1-phenylen)bis(di-p-methylphenoxyphosphin), (Oxydi-2,1-phenylen)bis(di-1,3,5-trimethyl-phenoxyphosphin), 2,2'-Bis(diphenoxy-phosphin)-1,1'-biphenyl, 2,2'-Bis(di-o-methylphenoxyphosphin)-1,1'-biphenyl, 2,2'-Bis(di-p-methylphenoxyphosphin)-1,1'-biphenyl, 2,2'-Bis(di-1,3,5-trimethylphenoxyphosphin)-1,1'-biphenyl, 1,2-Bis(di-(1,3,5,7-tetramethyl-6,9,10-trioxa-2-phosphaadamantylmethyl)ferrocen, 1-(tert-Butoxycarbony1)-(2S,4S)-2-[(diphenylphosphino)methyl]-4-(dibenzophos-pholyl)pyrrolidin, 1-(tert-Butoxy-carbonyl)-(2S,4S)-2-[(dibenzophospholyl)methyl]-4-(diphenylphosphino)pyrrolidin, 1-(tert-Butoxycarbonyl)-(2S,4S)-4-(dibenzophospholyl)-2-[(dibenzophospholyl)methyl]-pyrrolidin, BINAPHOS, Kelliphit, Chiraphit, Bis-3,4-diazophospholan; Bis(phos-pholan)liganden, wie Bis(2,5-transdialkylphospholan), Bis(2,4-trans-dialkylphos-phethan), 1,2-Bis(phenoxyphosphin)ethan, 1,2-Bis(3-methylphenoxyphosphin)ethan, 1,2-Bis(2-methylphenoxyphosphin)ethan, 1,2-Bis(1-methylphenoxyphosphin)ethan, 1,2-Bis(1,3,5-trimethylphenoxyphosphin)ethan, 1,3-Bis(phenoxyphosphin)propan, 1,3-Bis(3-methylphenoxyphosphin)propan, 1,3-Bis(2-methylphenoxyphosphin)propan, 1,3-Bis(1-methylphenoxyphos-phin)propan, 1,3-Bis(1,3,5-trimethylphenoxyphos-phin)propan,1,4-Bis(phenoxy-phosphin)butan, 1,4-Bis(3-methylphenoxyphosphin)butan, 1,4-Bis(2-methy-lphenoxyphosphin)butan, 1,4-Bis(1-methylphenoxyphosphin)butan, 1,4-Bis(1,3,5-trimethylphenoxyphosphin)butan.

Bevorzugt beträgt der Anteil an Katalysator C bezogen auf die eingesetzte mono-funktionalisierte Dialkylphosphinsäure (VI) 0,00001 bis 20 mol-%, besonders bevorzugt 0,0001 bis 10 mol-%.

Bevorzugt erfolgt die Hydrierungsreaktion in Gegenwart eines Amins.

Bevorzugte Amine sind Ammoniak, Monoamine, Diamine, höhere Amine und die mono-aminofunktionalisierte Dialkylphosphinsäure, deren Salz oder Ester.

Bevorzugte Monoamine sind beispielsweise Amine der Formel R'-NH₂, wobei R' linearer oder verzweigter C₁-₂₀-Alkyl entspricht. Bevorzugt sind Methylamin, Ethylamin, Propylamin, i-Propylamin, Butylamin, i-Butylamin, Pentylamin und 2-Ethylhexylamin.

Bevorzugte Diamine sind beispielsweise Amine der Formel H₂N-R"-NH₂, wobei R" linearer oder verzweigter C₁-₂₀-Alkyl entspricht. Bevorzugt sind Ethylendiamin, Propylendiamin, Diaminobutan, Pentamethylendiamin und Hexamethylendiamin.

Wird Ammoniak als Amin verwendet beträgt der Partialdruck des Ammoniaks vorzugsweise 0,01 bis 100 bar, besonders bevorzugt 0,05 bis 50 bar, insbesondere 0,1 bis 20 bar durchgeführt.

Bevorzugt beträgt die Konzentration an Ammoniak in dem Reaktionsgemisch 1 bis 30 Gew.-%, besonders bevorzugt 5 bis 25 Gew.-%.

Bevorzugt beträgt die Konzentration an Monoamin und/oder Diamin in dem Reaktionsgemisch 1 bis 80 Gew.-%, besonders bevorzugt 5 bis 60 Gew.-%.

Bevorzugt wird die Hydrierungsreaktion in Gegenwart eines Promotors durchgeführt, wobei als Promotoren Alkali- und Erdalkalimetallhydroxide und -alkoholate bevorzugt sind. Beispiele bevorzugter Promotoren sind NaOH, KOH, Mg(OH)₂, Ca(OH)₂, Ba(OH)₂ sowie Natrium- oder Kaliummethanolat, Natriumethanolat oder Natriumbutylat, wobei NaOH, KOH besonders bevorzugt sind.

Das Verhältnis von Promoter zu Katalysator beträgt vorzugsweise etwa 0,001:1 bis 0,5:1, bevorzugt etwa 0,01:1 bis 0,2:1, besonders bevorzugt 0,04:1 bis 0,1:1. Bevorzugt werden zunächst wenigstens ein Teil des Promotors und zweitens das Amin dem Katalysator und/oder der Lösung/Suspension, die der Katalysator enthält, zugegeben. Vorzugsweise werden wenigstens 10 Gew.-%, bevorzugt 20 Gew.-% und besonders bevorzugt 50 Gew.-% des Promotors zunächst zugesetzt.

Besonders bevorzugt werden 100 Gew.-% des Promotors zugesetzt.

Besonders bevorzugt werden die Übergangsmetalle in ihrem nullwertigen Zustand eingesetzt.

Bevorzugt wirkt der heterogen wirkende Katalysator während der Umsetzung als Suspension oder an eine feste Phase gebunden.

Bevorzugt erfolgt die Umsetzung in einem Lösungsmittel als Ein-Phasen-System in homogener oder heterogener Mischung und/oder in der Gasphase.

Geeignete Lösungsmittel sind die, wie sie weiter vorne in Verfahrensstufe a) eingesetzt werden.

Bevorzugt erfolgt die Umsetzung in einem Dialkylphosphinsäure-Lösungsmittel-Molverhältnis von 1:10.000 bis 1:0, besonders bevorzugt in einem Dialkylphosphinsäure-Lösungsmittel-Molverhältnis von 1:50 bis 1:1.

Bevorzugt erfolgt die Reaktion bei Temperaturen von 20 bis 200 °C und besonders bevorzugt von 40 bis 150 °C, insbesondere von 60 bis 100 °C.

Bevorzugt beträgt die Reaktionszeit 0,1 bis 20 Stunden.

Bevorzugt wird die Umsetzung unter dem Partialdruck des Wasserstoffes und/oder des Lösungsmittels durchgeführt.

Der Verfahrensschritt des erfindungsgemäßen Verfahrens wird vorzugsweise bei einem Partialdruck des Wasserstoffs von 0,1 bis 100 bar, besonders bevorzugt 0,5 bis 50 bar, insbesondere 1 bis 20 bar durchgeführt.

Der Verfahrensschritt des erfindungsgemäßen Verfahrens wird vorzugsweise bei einem absoluten Druck von 0,1 bis 150 bar, besonders bevorzugt 0,5 bis 70 bar, insbesondere 1 bis 30 bar durchgeführt.

Die erfindungsgemäße Hydrierung kann in flüssiger Phase, in der Gasphase oder auch in überkritischer Phase durchgeführt werden. Dabei wird der Katalysator bei Flüssigkeiten vorzugsweise homogen oder als Suspension eingesetzt, während bei Gasphasen- oder überkritischer Fahrweise eine Festbettanordnung von Vorteil ist.

Die mono-aminofunktionalisierten Dialkylphosphinsäure oder deren Salz (III) kann im Folgenden zu weiteren Metallsalzen umgesetzt werden.

Bevorzugt handelt es sich bei den eingesetzten Metallverbindungen der Verfahrensstufe d) um Verbindungen der Metalle Mg, Ca, Al, Sb, Sn, Ge, Ti, Fe, Zr, Zn, Ce, Bi, Sr, Mn, Li, Na, K, besonders bevorzugt Ca, Al, Ti, Zn, Sn, Ce, Fe.

Geeignete Lösungsmittel für Verfahrensstufe d) sind die, wie sie weiter vorne in Verfahrensstufe a) eingesetzt werden.

Bevorzugt erfolgt die Umsetzung der in Verfahrensstufe d) in wässrigem Medium.

Bevorzugt setzt man in Verfahrensstufe d) die nach Verfahrensstufe c) erhaltenen erhaltene mono-aminofunktionalisierten Dialkylphosphinsäuren, deren Ester und/oder Alkalisalze (III) mit Metallverbindungen von Mg, Ca, Al, Zn, Ti, Sn, Zr, Ce oder Fe zu den mono-aminofunktionalisierten Dialkylphosphinsäuresalzen (III) dieser Metalle um.

Die Umsetzung erfolgt dabei in einem Molverhältnis von mono-aminofunktionalisierter Dialkylphosphinsäure/-ester/-salz (III) zu Metall von 8 zu 1 bis 1 zu 3 (für vierwertige Metallionen oder Metalle mit stabiler vierwertiger Oxiationsstufe), von 6 zu 1 bis 1 zu 3 (für dreiwertige Metallionen oder Metalle mit stabiler dreiwertiger Oxidationsstufe), von 4 zu 1 bis 1 zu 3 (für zweiwertige Metallionen oder Metalle mit stabiler zweiwertiger Oxidationsstufe) und von 3 zu 1 bis 1 zu 4 (für einwertige Metallionen oder Metalle mit stabiler einwertiger Oxidationsstufe).

Bevorzugt führt man in Verfahrenstufe c) erhaltenes mono-aminofunktionalisiertes Dialkylphosphinsäureester/-salz (III) in die entsprechende Dialkylphosphinsäure über und setzt in Verfahrensstufe d) diese mit Metallverbindungen von Mg, Ca, Al, Zn, Ti, Sn, Zr, Ce oder Fe zu den mono-aminofunktionalisierten Dialkylphosphinsäuresalzen (III) dieser Metalle um.

Bevorzugt wandelt man in Verfahrenstufe c) erhaltene mono-aminofunktionalisierte Dialkylphosphinsäure/-ester (III) in ein Dialkylphosphinsäure-Alkalisalz um und setzt in Verfahrensstufe d) dieses mit Metallverbindungen von Mg, Ca, Al, Zn, Ti, Sn, Zr, Ce oder Fe zu den mono-aminofunktionalisierten Dialkylphosphinsäuresalzen (III) dieser Metalle um.

Bevorzugt handelt es sich bei den Metallverbindungen von Mg, Ca, Al, Zn, Ti, Sn, Zr, Ce oder Fe für Verfahrenstufe d) um Metalle, Metalloxide, -hydroxide, -oxidhydroxide, -borate, -carbonate, -hydroxocarbonate, -hydroxocarbonathydrate, gemischte -hydroxocarbonate, - gemischte hydroxocarbonathydrate, -phosphate, -sulfate, -sulfat hydrate, -hydroxosulfathydrate, gemischte -hydroxosulfathydrate, oxysulfate, -acetate, -nitrate, fluoride, -fluoridhydrate, -chloride, chloridhydrate, -oxychloride, -bromide, -iodide, -iodid hydrate, -carbonsäurederivate und/oder -alkoxide.

Bevorzugt handelt es sich bei den Metallverbindungen um Aluminiumchlorid, Aluminiumhydroxid, Aluminiumnitrat, Aluminiumsulfat, Titanylsulfat, Zinknitrat, Zinkoxid, Zinkhydroxid und/oder Zinksulfat.

Geeignet sind auch metallisches Aluminium, -fluorid, -hydroxychlorid, -bromid, -iodid, -sulfid, -selenid; -phosphid, -hypophosphit,-antimonid, -nitrid; -carbid, -hexafluorosilicat; -hydrid, -calciumhydrid, -borhydrid; -chlorat; Natrium-Aluminiumsulfat, Aluminium-Kaliumsulfat, Aluminiumammoniumsulfat, -nitrat, -metaphosphat, -phosphat, -silicat, -magnesiumsilicat, -carbonat, -hydrotalcit, -natriumcarbonat, -borat; -thiocyanat; -oxid, -oxidhydroxid, ihre entsprechenden Hydrate und/oder Polyaluminiumhydroxyverbindungen, die vorzugsweise einen Aluminiumgehalt von 9 bis 40 Gew.-% besitzen.

Geeignet sind auch Aluminiumsalze von Mono-, Di-, Oligo-, Polycarbonsäuren wie z. B. Aluminiumdiacetat, -acetotartrat, -formiat, -lactat, -oxalat, -tartrat, -oleat, -palmitat, -sterarat, -trifluoromethansulfonat, -benzoat,-salicylat, -8-oxychinolat.

Geeignet sind ebenfalls elementares, metallisches Zink sowie Zinksalze wie z. B. Zinkhalogenide (Zinkfluorid, Zinkchloride, Zinkbromid, Zinkiodid).

Geeignet ist auchZinkborat, -carbonat,-hydroxidcarbonat, -silicat, -hexafluorosilicat, -stannat, -hydroxidstannat, -Magnesium-Aluminium-Hydroxidcarbonat; -nitrat, -nitrit, -phosphat, -pyrophosphat; -sulfat, -phosphid, -selenid, -tellurid und Zinksalze der Oxosäuren der siebten Hauptgruppe (Hypohalogenite, Halogenite, Halogenate, z. B. Zinkiodat, Perhalogenate, z. B. Zinkperchlorat); Zinksalze der Pseudohalogenide (Zinkthiocyanat, -cyanat, -cyanid); Zinkoxide, -peroxide, -hydroxide oder gemischte Zinkoxidhydroxide.

Bevorzugt sind Zinksalze der Oxosäuren der Übergangsmetalle (bspw. Zinkchromat(VI)hydroxyd, -chromit, -molybdat, -permanganat, -molybdat).

Geeignet sind auch Zinksalze von Mono-, Di-, Oligo-, Polycarbonsäuren, wie z. B. Zinkformiat, -acetat, -trifluoracetat, -propionat, -butyrat, -valerat, -caprylat, -oleat, -stearat, -oxalat, -tartrat, -citrat, -benzoat, -salicylat, -lactat, -acrylat, -maleat, -succinat, Salze von Aminosäuren (Glyzin), von sauren Hydroxyfunktionen (Zinkphenolat etc.), Zink-p-phenolsulfonat, -acetylacetonat, -stannat, -dimethyldithiocarbamat, -trifluormethansulfonat.

Bei den Titan-Verbindungen ist metallisches Titan ebenso wie Titan(III) und/oder (IV) -chlorid, -nitrat, -sulfat, -formiat, -acetat, -bromid, -fluorid, -oxychlorid, -oxysulfat, -oxid, -n-propoxid, -n-butoxid, -isopropoxid, -ethoxid, -2-ethylhexyloxid.

Geeignet ist auch metallisches Zinn sowie Zinnsalze (Zinn(II) und /oder (IV) -chlorid); Zinnoxide und Zinn-Alkoxid wie z. B. Zinn-(IV)-tert-butoxid.

Geeignet sind auch Cer(III)fluorid, -chlorid, -nitrat.

Bei den Zirkonium-Verbindungen ist metallisches Zirkonium sowie Zirkoniumsalze wie Zirkoniumchlorid, -sulfat, Zirconylacetat, Zirconylchlorid bevorzugt. Weiterhin bevorzugt sind Zirkonoxide sowie Zirkon-(IV)-tert-butoxid.

Bevorzugt erfolgt die Umsetzung in Verfahrensstufe d) bei einem Feststoffgehalt der mono-aminofunktionalisierten Dialkylphosphinsäuresalze von 0,1 bis 70 Gew.-%, bevorzugt 5 bis 40 Gew.-%.

Bevorzugt erfolgt die Umsetzung in Verfahrensstufe d) bei einer Temperatur von 20 bis 250 °C, bevorzugt bei einer Temperatur von 80 bis 120 °C.

Bevorzugt erfolgt die Umsetzung in Verfahrensstufe d) bei einem Druck zwischen 0,01 und 1000 bar, bevorzugt 0,1 bis 100 bar.

Bevorzugt erfolgt die Umsetzung in Verfahrensstufe d) während einer Reaktionszeit von 1*10⁻⁷ bis 1000 h.

Bevorzugt wird das nach der Verfahrensstufe d) durch Filtrieren und/oder Zentrifugieren aus dem Reaktionsgemisch abgetrennte mono-aminofunktionalisierte Dialkylphosphinsäuresalz (III) getrocknet.

Bevorzugt wird das nach Verfahrensstufe c) erhaltene Produktgemisch ohne weitere Reinigung mit den Metallverbindungen umgesetzt.

Bevorzugte Lösungsmittel sind die in Verfahrensschritt a) genannten Lösungsmittel.
Bevorzugt ist die Umsetzung in Verfahrensstufe c) und/oder d) im durch Stufe a) und/oder b) gegebenen Lösungsmittelsystem.

Bevorzugt ist die Umsetzung in Verfahrensstufe d) in einem modifizierten gegebenen Lösungsmittelsystem. Hierfür werden acide Komponenten, Lösevermittler, Schauminhibitoren etc. zugegeben.

In einer weiteren Ausführungsform des Verfahrens wird das nach Verfahrensstufe a), b) und/oder c) erhaltene Produktgemisch aufgearbeitet.

In einer weiteren Ausführungsform des Verfahrens wird das nach Verfahrensstufe c) erhaltene Produktgemisch aufgearbeitet und danach die nach Verfahrensstufe c) erhaltenen mono-aminofunktionalisierten Dialkylphosphinsäuren und/oder deren Salze oder Ester (III) in Verfahrensstufe d) mit den Metallverbindungen umgesetzt.

Bevorzugt wird das Produktgemisch nach Verfahrensstufe c) aufgearbeitet, indem die mono-aminofunktionalisierten Dialkylphosphinsäuren und/oder deren Salze oder Ester (III) durch Entfernen des Lösungsmittelsystems isoliert werden, z. B. durch Eindampfen.

Bevorzugt weist das mono-aminofunktionalisierte Dialkylphosphinsäuresalz (III) der Metalle Mg, Ca, Al, Zn, Ti, Sn, Zr, Ce oder Fe wahlweise eine Restfeuchte von 0,01 bis 10 Gew.-%, bevorzugt von 0,1 bis 1 Gew.-%, eine mittlere Teilchengröße von 0,1 bis 2000 µm, bevorzugt von 10 bis 500 µm, eine Schüttdichte von 80 bis 800 g/l, bevorzugt von 200 bis 700 g/l, eine Rieselfähigkeit nach Pfrengle von 0,5 bis 10, bevorzugt von 1 bis 5, auf.

Die Aminofunktionalität der mono-aminofunktionalisierten Dialkylphosphinsäuren, deren Salze und Ester der Formel (III) kann im Folgenden mit Mineralsäuren, Carbonsäuren, Lewissäuren, ogranischen Säuren oder Mischungen dieser Säuren zu weiteren Ammoniumsalzen umgesetzt werden.

Bevorzugt erfolgt die Umsetzung bei einer Temperatur von 0 bis 150 °C, besonders bevorzugt bei einer Temperatur von 20 bis 70 °C.

Geeignete Lösungsmittel sind die, wie sie weiter vorne in Verfahrensstufe a) eingesetzt werden.

Bevorzugte Mineralsäuren sind beispielsweise Salzsäure, Schwefelsäure, Salpetersäure oder Phosphorsäure, Phosphonsäure, Phosphinsäure.

Bevorzugte Carbonsäuren sind beispielsweise Ameisensäure, Essigsäure, Propionsäure, Buttersäure, Milchsäure, Palmsäure, Stearinsäure, Malonsäure, Maleinsäure, Fumarsäure, Weinsäure, Zitronensäure, Ascorbinsäure.

Bevorzugte Lewissäuren sind Borane, wie beispielsweise Diboran, Trialkylborane, wie beispielsweiseTrimethylboran, Triethylboran, Tributylboran, Triarylborane, wie beispielsweise Triphenylboran.

Besonders bevorzugt handelt es sich bei den Ammoniumsalzen um Salze oben genannter mono-aminofunktionalisierten Dialkylphosphinsäuren, deren Salze und Ester mit Salzsäure, Phosphorsäure, Phosphonsäure, Phosphinsäure, Essigsäure, Zitronensäure, Ascorbinsäure, Triphenylboran.

Besonders bevorzugt enthalten die Formkörper, -Filme, -Fäden und -Fasern 5 bis 30 Gew.-% der mono-aminofunktionalisierte Dialkylphosphinsäure/-ester/-salze, hergestellt nach einem oder mehreren der Ansprüche 1 bis 10, 5 bis 90 Gew.-% Polymer oder Mischungen derselben, 5 bis 40 Gew.-% Additive und 5 bis 40 Gew.-% Füllstoff, wobei die Summe der Komponenten immer 100 Gew.-% beträgt.

Bevorzugt handelt es sich bei den Additiven um Antioxidantien, Antistatica, Treibmittel, weitere Flammschutzmittel, Hitzestabilisatoren, Schlagzähmodifikatoren, Prozesshilfsmittel, Gleitmittel, Lichtschutzmittel, Antidrippingmittel, Compatibilizer, Verstärkungsstoffe, Füllstoffe, Keimbildungsmittel, Nukleierungsmittel, Additive zur Lasermarkierung, Hydrolysestabilisatoren, Kettenverlängerer, Farbpigmente, Weichmacher und/oder Plastifizierungsmittel.

Bevorzugt ist ein Flammschutzmittel, enthaltend 0,1 bis 90 Gew.-% der halogenarmen mono-aminofunktionalisierten Dialkylphosphinsäure, -ester und -salze (III) und 0,1 bis 50 Gew.% weitere Additive, besonders bevorzugt Diole.

Bevorzugte Additive sind auch Aluminiumtrihydrat, Antimonoxid, bromierte aromatische oder cycloaliphatische Kohlenwasserstoffe, Phenole, Ether, Chlorparaffin, Hexachlorocyclopentadien-Adducte, Roter Phosphor, Melaminderivate, Melamincyanurate, Ammoniumpolyphosphate und Magnesiumhydroxid. Bevorzugte Additive sind auch weitere Flammschutzmittel, insbesondere Salze von Dialkylphosphinsäuren.

Insbesondere betrifft die Erfindung die Verwendung der erfindungsgemäßen mono-aminofunktionalisierten Dialkylphosphinsäure, -ester und -salze (III) als Flammschutz-mittel bzw. als Zwischenstufe zur Herstellung von Flammschutzmitteln für thermo-plastische Polymere wie Polyester, Polystyrol oder Polyamid und für duroplastische Polymere wie ungesättigte Polyesterharze, Epoxidharze, Polyurethane oder Acrylate.

Geeignete Polyester leiten sich von Dicarbonsäuren und deren-Ester und Diolen und/oder von Hydroxycarbonsäuren oder den entsprechenden Lactonen ab. Besonders bevorzugt wird Terephthalsäure und Ethylenglykol, Propan-1,3-diol, Butan-1,3-diol eingesetzt.

Geeignete Polyester sind u.a. Polyethylenterephthalat, Polybutylenterephthalat (Celanex^{®} 2500, Celanex^{®} 2002, Fa Celanese; Ultradur^{®}, Fa. BASF), Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

Die folgenden Schritte können mit oder unter Zugabe der erfindungsgemäß hergestellten Verbindungen ausgeführt werden.

Bevorzugt wird zur Herstellung der Formmasse ausgehend von den freien Dicarbonsäure und Diolen zunächst direkt verestert und dann polykondensiert.

Bevorzugt wird ausgehend von Dicarbonsäureestern, insbesondere Dimethylestern, zunächst umgeestert und dann unter Verwendung der hierfür üblichen Katalysatoren polykondensiert.

Bevorzugt können bei der Polyesterherstellung neben den gängigen Katalysatoren auch übliche Additive (Vernetzungsmittel, Mattierungs- und Stabilisierungsmittel, Nukleierungsmittel, Farb- und Füllstoffe etc.) zugesetzt werden.

Bevorzugt findet die Veresterung und/oder Umesterung bei der Polyesterherstellung bei Temperaturen von 100 - 300 °C statt, besonders bevorzugt 150 - 250 °C.

Bevorzugt findet die Polykondensation bei der Polyesterherstellung bei Drücken zwischen 0,1 bis 1,5 mbar und Temperaturen von 150 - 450 °C statt, besonders bevorzugt bei 200 - 300 °C.

Die erfindungsgemäß hergestellten flammgeschützten Polyester-Formmassen werden bevorzugt in Polyester-Formkörpern eingesetzt.

Bevorzugte Polyester-Formkörper sind Fäden, Fasern, Folien und Formkörper, die als Dicarbonsäure-Komponente hauptsächlich Terephthalsäure und als Diolkomponente hauptsächlich Ethylenglykol enthalten.

Bevorzugt beträgt der resultierende Phosphorgehalt in aus flammgeschützten Polyester hergestellten Fäden und Fasern 0,1 - 18 Gew.-%, bevorzugt 0,5 - 15 Gew.-% und bei Folien 0,2 - 15 Gew.-%, bevorzugt 0,9 - 12 Gew.-%.

Geeignete Polystyrole sind Polystyrol, Poly-(p-methylstyrol) und/oder Poly-(alpha-methylstyrol).

Bevorzugt handelt es sich bei den geeigneten Polystyrolen um Copolymere von Styrol oder alpha-Methylstyrol mit Dienen oder Acrylderivaten, wie z. B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den geeeigneten Polystyrolen auch um Pfropfcopolymere von Styrol oder alpha-Methylstyrol, wie z. B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z. B. als so genannte ABS-, MBS-, ASA- oder AES-Polymere bekannt sind.

Bevorzugt handelt es sich bei den Polymeren um Polyamide und Copolyamide, die sich von Diaminen und Dicarbonsäuren und/oder von Aminocarbonsäuren oder den entsprechenden Lactamen ableiten, wie Polyamid 2,12, Polyamid 4, Polyamid 4,6, Polyamid 6, Polyamid 6,6, Polyamid 6,9, Polyamid 6,10, Polyamid 6,12, Polyamid 6,66, Polyamid 7,7, Polyamid 8,8, Polyamid 9,9, Polyamid 10,9, Polyamid 10,10 , Polyamid 11, Polyamid 12, usw. Solche Polyamide sind z. B unter den Handelsnamen Nylon^{®}, Fa. DuPont, Ultramid^{®}, Fa. BASF, Akulon^{®} K122, Fa. DSM, Zytel^{®} 7301, Fa. DuPont; Durethan^{®} B 29, Fa. Bayer und Grillamid^{®}, Fa. Ems Chemie bekannt.

Geeignet sind auch aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z. B. Poly-2,4,4-trimethylhexamethylen-terephthalamid oder Poly-m-phenylenisophthalamid, Blockcopolymere der vorstehend genannten Polyamide mit Polyolefinen, Olefin-Copolymeren, lonomeren oder chemisch gebundenen oder gepfropften Elastomeren, oder mit Polyethern, wie z. B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Die mono-aminofunktionalisierte Dialkylphosphinsäure/-ester/-salze, hergestellt nach einem oder mehreren der Ansprüche 1 bis 10 werden bevorzugt in Formmassen angewendet, die weiter zur Erzeugung von Polymer-Formkörpern eingesetzt werden.

Besonders bevorzugt enthält die flammgeschützte Formmasse 5 bis 30 Gew.-% mono-aminofunktionalisierte Dialkylphosphinsäuren, -salze oder -ester, die nach einem oder mehreren der Ansprüche 1 bis 10 hergestellt wurden, 5 bis 90 Gew.-% Polymer oder Mischungen derselben, 5 bis 40 Gew.-% Additive und 5 bis 40 Gew.-% Füllstoff, wobei die Summe der Komponenten immer 100 Gew.-% beträgt.

Die Erfindung betrifft auch Flammschutzmittel, die die mono-aminofunktionalisierte Dialkylphosphinsäuren, -salze oder -ester, die nach einem oder mehreren der Ansprüche 1 bis 10 hergestellt wurden enthalten.

Außerdem betrifft die Erfindung Polymer-Formmassen sowie Polymer-Formkörper, -Filme, -Fäden und -Fasern, enthaltend erfindungsgemäß hergestellten mono-aminofunktionalisierten Dialkylphosphinsäuresalze (III) der Metalle Mg, Ca, Al, Zn, Ti, Sn, Zr, Ce oder Fe.

Die Erfindung wird durch die nachstehenden Beispiele erläutert.

Herstellung, Verarbeitung und Prüfung von flammgeschützten Polymerformmassen und flammgeschützten Polymerformkörpern.

Die Flammschutzkomponenten werden mit dem Polymergranulat und evtl. Additiven vermischt und auf einem Doppelschnecken-Extruder (Typ Leistritz LSM^{®} 30/34) bei Temperaturen von 230 bis 260 °C (PBT-GV) bzw. von 260 bis 280 °C (PA 66-GV) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Aarburg Allrounder) bei Massetemperaturen von 240 bis 270 °C (PBT-GV) bzw. von 260 bis 290 °C (PA 66-GV) zu Prüfkörpern verarbeitet. Die Prüfkörper werden anhand des UL 94-Tests (Underwriter Laboratories) auf Flammwidrigkeit (Flammschutz) geprüft und klassifiziert.

An Prüfkörpern aus jeder Mischung wurden die Brandklasse UL 94 (Underwriter Laboratories) an Probekörpern der Dicke 1,5 mm bestimmt.

Nach UL 94 ergeben sich folgende Brandklassen:
V-0 kein Nachbrennen länger als 10 sec., Summe der Nachbrennzeiten bei 10 Beflammungen nicht größer als 50 sec., kein brennendes Abtropfen, kein vollständiges Abbrennen der Probe, kein Nachglühen der Proben länger als 30 sec. nach Beflammungsende
V-1 kein Nachbrennen länger als 30 sec. nach Beflammungsende, Summe der Nachbrennzeiten bei 10 Beflammungen nicht größer als 250 sec., kein Nachglühen der Proben länger als 60 sec. nach Beflammungsende, übrige Kriterien wie bei V-0
V-2 Zündung der Watte durch brennendes Abtropfen, übrige Kriterien wie bei V-1 nicht klassifizierbar (nkl) erfüllt nicht die Brandklasse V-2.

Bei einigen untersuchten Proben wurde außerdem der LOI-Wert gemessen. Der LOI-Wert (Limiting Oxygen Index) wird nach ISO 4589 bestimmt. Nach ISO 4589 entspricht der LOI der geringsten Sauerstoffkonzentration in Volumen-prozent, die in einer Mischung von Sauerstoff und Stickstoff gerade noch die Verbrennung des Kunststoffs unterhält. Je höher der LOI-Wert, desto schwerer entflammbar ist das geprüfte Material.
- LOI 23: brennbar
- LOI 24-28: bedingt brennbar
- LOI 29-35: flammwidrig
- LOI >36: besonders flammwidrig

Eingesetzte Chemikalien und Abkürzungen
- VE-Wasser: voll-entsalztes Wasser
- AIBN: Azo-bis-(isobutyronitril), (Fa. WAKO Chemicals GmbH)
- THF: Tetrahydrofuran
- WakoV65: 2,2'-Azobis(2,4-dimethyl-valeronitril),
(Fa. WAKO Chemicals GmbH)
- Deloxan^{®} THP II: Metallfänger (Fa. Evonik Industries AG)

### Beispiel 1

Bei Raumtemperatur werden in einem Dreihalskolben mit Rührer und Intensivkühler 188 g entgastes Wasser vorgelegt und unter Stickstoff 0,2 mg Palladium(II)sulfat und 2,3 mg Tris(3-sulfo-phenyl)phosphin Trinatriumsalz hinzugegeben und gerührt, dann 66 g Phosphinsäure in 66 g Wasser zugegeben. Die Reaktionslösung wird in einen 2 I-Büchi-Reaktor überführt und unter Rühren und unter Druck mit Ethylen beschickt und auf 80 °C geheizt. Nach einer Ethylenaufnahme von 28 g wird abgekühlt und freies Ethylen abgelassen. Das Reaktionsgemisch wird am Rotationsverdampfer vom Lösungsmittel befreit. Der Rückstand wird mit 100 g VE-Wasser versetzt und dann filtriert, das Filtrat mit Toluol extrahiert, danach wird vom Lösungsmittel befreit und die erhaltene Ethylphosphonigsäure aufgefangen. Man erhält so 92 g (98 % der Theorie) Ethylphosphonigsäure.

### Beispiel 2

Wie in Beispiel 1 werden 99 g Phosphinsäure, 396 g Butanol, 42 g Ethylen, 6,9 mg Tris(dibenzylidenaceton)dipalladium, 9,5 mg 4,5-Bis(diphenylphosphino)-9,9-dimethylxanthen umgesetzt, dann zur Reinigung über eine mit Deloxan^{®} THP II beschickte Säule gegeben und danach nochmal n-Butanol zugegeben. Bei einer Reaktionstemperatur von 80 - 110 °C wird das gebildete Wasser durch Azeotropdestillation entfernt. Das Produkt wird durch Destillation bei vermindertem Druck gereinigt. Man erhält so 189 g (84 % der Theorie) Ethylphosphonigsäurebutylester.

### Beispiel 3

Wie in Beispiel 1 werden 198 g Phosphinsäure, 198 g Wasser, 84 g Ethylen, 6,1 mg Palladium(II)sulfat, 25,8 mg 9,9-Dimethyl-4,5-bis(diphenylphosphino)-2,7-sulfonatoxanthen Dinatriumsalz umgesetzt, dann zur Reinigung über eine mit Deloxan^{®} THP II beschickte Säule gegeben und danach n-Butanol zugegeben. Bei einer Reaktions-temperatur von 80 - 110 °C wird das gebildete Wasser durch Azeotropdestillation entfernt. Das Produkt wird durch Destillation bei vermindertem Druck gereinigt. Man erhält so 374 g (83 % der Theorie) Ethylphosphonigsäurebutylester.

### Beispiel 4

In einem 500 ml-Fünfhalskolben mit Gaseinleitungsrohr, Thermometer, Intensivrührer und Rückflusskühler mit Gasverbrennung werden 94 g (1 mol) Ethylphosphonigsäure (hergestellt wie in Beispiel 1) vorgelegt. Bei Raumtemperatur wird Ethylenoxid eingeleitet. Unter Kühlung wird eine Reaktionstemperatur von 70 °C eingestellt und noch eine Stunde bei 80 °C nachreagiert. Die Ethylenoxidaufnahme beträgt 65,7 g. Die Säurezahl des Produktes ist kleiner 1 mg KOH/g. Ausbeute: 129 g (94 % der Theorie) (Ethylphosphonigsäure-2-hydroxyethylester) als farbloses, wasserklares Produkt.

### Beispiel 5

564 g (6 mol) Ethylphosphonigsäure (hergestellt wie in Beispiel 1) werden in 860 g Wasser gelöst und in einen 5 I-Fünfhalskolben mit Thermometer, Rückflusskühler, Intensivrührer und Tropftrichter vorgelegt. Nach Aufheizen der Reaktionsmischung auf 100 °C wird bei Normaldruck 371 g (7 mol) Acrylnitril und 500 g einer 5 %igen Natriumperoxodisulfat-Lösung (1,5 mol-% bzgl. Acrylnitril) zugetropft. Anschließend wird das Wasser abdestilliert, der Rückstand in THF aufgenommen, extrahiert und filtriert. Das Lösungsmittel des Filtrats wird im Vakuum abgetrennt. Es werden 732 g (83 % der Theorie) Ethyl-(2-cyanoethyl)-phosphinsäure als Öl erhalten.

### Beispiel 6

94 g (1 mol) Ethylphosphonigsäure (hergestellt wie in Beispiel 1) und 67 g (1 mol) Methacrylnitril werden in einem Vierhalsrundkolben mit Rührer, Rückflusskühler, Thermometer und Stickstoffeinlass in 200 ml Eisessig vorgelegt und erwärmt. Innerhalb von 1 h werden bei ca. 100 °C 98,4 g einer 5 %-igen Lösung von AIBN in Eisessig zugetropft. Danach wurde das Lösungmittel im Vakuum abdestilliert. Es werden 117 g (80 % der Theorie) Ethyl-(2-cyano-2-methylethyl)-phosphinsäure erhalten.

### Beispiel 7

150 g (1 mol) des Ethylphosphonigsäurebutylesters (hergestellt wie in Beispiel 2) und 64 g (1,2 mol) Acrylnitril in 217 g Toluol werden auf ca. 100 °C erwärmt. Unter Rühren werden 124 g einer 10 %-igen Lösung von Wako V65 in Toluol zudosiert. Das Lösungsmittel wird im Vakuum abdestilliert. Es werden 171 g (84 % der Theorie) Ethyl-(2-cyanoethyl)-phosphinsäurebutylester erhalten.

### Beispiel 8

441 g (3 mol) Ethyl-(2-cyanoethyl)-phosphinsäure (hergestellt wie in Beispiel 5) werden bei 85 °C in 400 ml Toluol gelöst und mit 888 g (12 mol) Butanol versetzt. Bei einer Reaktionstemperatur von ca. 100 °C wird das gebildete Wasser durch Azeotropdestillation entfernt. Das Produkt Ethyl-(2-cyanoethyl)-phosphinsäurebutylester wird durch Destillation bei vermindertem Druck gereinigt.

### Beispiel 9

441 g (3,0 mol) Ethyl-2-cyanoethyl-phosphinsäure (hergestellt wie in Beispiel 5) werden bei 80 °C in 400 ml Toluol gelöst und mit 315 g (3,5 mol) 1,4-Butandiol versetzt und in einer Destillationsapparatur mit Wasserabscheider bei ca. 100 °C während 4 h verestert. Nach beendeter Veresterung wird das Toluol im Vakuum abgetrennt. Es werden 604 g (92 % der Theorie) Ethyl-(2-cyanoethyl)phosphinsäure-4-hydroxybutylester als farbloses Öl erhalten.

### Beispiel 10

441 g (3,0 mol) Ethyl-(2-cyanoethyl)-phosphinsäure (hergestellt wie in Beispiel 5) werden bei 85 °C in 400 ml Toluol gelöst und mit 248 g (4 mol) Ethylenglykol versetzt und in einer Destillationsapparatur mit Wasserabscheider bei ca. 100 °C während 4 h verestert. Nach beendeter Veresterung wird das Toluol und überschüssiges Ethylglykol im Vakuum abgetrennt. Es werden 510 g (89 % der Theorie) Ethyl-2-cyanoethylphosphinsäure-2-hydroxyethylester als farbloses Öl erhalten

### Beispiel 11

In einem Glasautoklav werden 240 g Ethanol, 68 g Ammoniak, 52 g Wasser, 6,4 g Raney^{®} Nickel (dotiert mit 1,5 Gew.% Chrom), 54,4 g (0,37 mol) Ethyl-(2-cyanoethyl)-phosphinsäure (hergestellt wie in Beispiel 5) bei 70 °C mit Wasserstoff bei 25 bar umgesetzt. Nach einer Reaktionszeit von 8 Stunden wurde der Autoklav entspannt, die Reaktionslösung filtriert und im Vakuum eingeengt. Der erhaltene Rückstand wird in 150 g Wasser aufgenommen mit ca. 30 g (0,37 mol) 50 %ige Natriumhydroxid-Lösung versetzt und durch Zugabe von etwa 18,1 g (0,19 mol) konzentrierter Schwefelsäure neutralisiert, danach das Wasser im Vakuum abdestilliert. Der Rückstand wird in Ethanol aufgenommen und filtriert. Das Lösungsmittel des Filtrats wird abgetrennt. Das Produkt wird chromatographisch gereinigt. Es werden 37,4 g (67 % der Theorie) Ethyl-(3-aminopropyl)-phosphinsäure als farbloses Öl erhalten.

### Beispiel 12

Bei Raumtemperatur werden in einem Dreihalskolben mit Rührer, Tropftrichter und Intensivkühler zu 2,3 g (0,06 mol) Lithiumaluminiumhydrid in 100 ml abs. Diethylether unter ständigem Rühren eine Lösung von 21,7 g (0,1 mol) Ethyl-(2-cyano-2-methylethyl)-phosphinsäurebutylester (hergestellt analog Beispiel 8) in 100 ml Diethylether so zugetropft, dass der Diethylether mäßig siedet. Danach wird 1 Stunde unter Rückfluss erhitzt und die Reaktionslösung mit 1,8 g (0,1 mol) Wasser versetzt, die unlöslichen Salze abfiltriert, das Lösungsmittel im Vakuum abgetrennt und das Produkt chromatographisch gereinigt. Es werden 18,8 g (85 % der Theorie) Ethyl-(2-methyl-3-aminopropyl)-phosphinsäurebutylester als farbloses Öl erhalten.

### Beispiel 13

207 g (1 mol) Ethyl-(3-aminopropyl)-phosphinsäurebutylester (hergestellt wie in Beispiel 12) und 242 g (1 mol) Triphenylboran werden in 400 ml Toluol 1 Stunde bei Raumtemperatur gerührt. Toluol wird bei vermindertem Druck abdestilliert. Man erhält 449 g (100 % der Theorie) Ethyl-(3-aminopropyl)-phosphinsäurebutylester als Triphenylboranadukt.

## Patentansprüche

1. Verfahren zur Herstellung von mono-aminofunktionalisierten Dialkylphosphinsäuren, -estern und -salzen mittels Acrylnitrilen, **dadurch gekennzeichnet, dass** man
a) eine Phosphinsäurequelle (I) 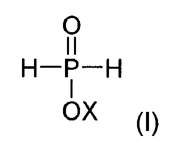 mit Olefinen (IV) 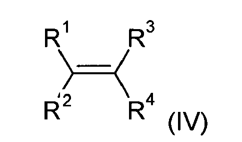 in Gegenwart eines Katalysators A zu einer Alkylphosphonigsäure, deren Salz oder Ester (II) 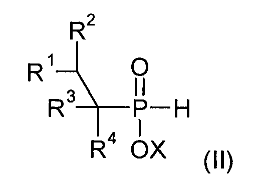 umsetzt,
b) die so entstandene Alkylphosphonigsäure, deren Salz oder Ester (II) mit einem Acrylnitril (V) 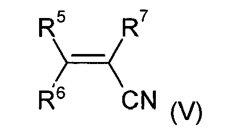 in Gegenwart eines Katalysators B zum mono-funktionalisierten Dialkylphosphinsäurederivat (VI) umsetzt und 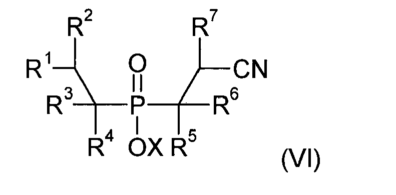
c) so entstandenes mono-funktionalisiertes Dialkylphosphinsäurederivat (VI) mit einem Reduktionsmittel oder in Gegenwart eines Katalysators C mit Wasserstoff zum mono-aminofunktionalisierten Dialkylphosphinsäurederivat (III) 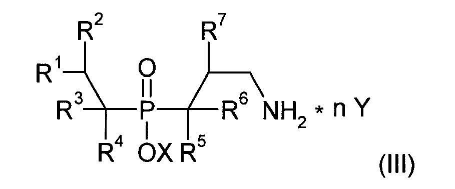 umsetzt, oder die nach Schritt a) erhaltene Alkylphosphonigsäure, deren Salz oder Ester (II) und/oder die nach Schritt b) erhaltene mono-funktionalisierte Dialkylphosphinsäure, deren Salz oder Ester (VI) und/oder die nach Schritt c) erhaltene mono-aminofunktionalisierte Dialkylphosphinsäure, deren Salz oder Ester (III) und/oder die jeweils resultierende Reaktionslösung davon mit einem Alkylenoxid oder einem Alkohol M-OH und/oder M'-OH verestert, und den jeweils entstandenen Alkylphosphonigsäureester (II), monofunktionalisierten Dialkylphosphinsäurester (VI) und/oder mono-aminofunktionalisierten Dialkylphosphinsäureester (III) den weiteren Reaktionsschritten b) oder c) unterwirft, wobei R¹, R², R³, R⁴, R⁵, R⁶, R⁷ gleich oder verschieden sind und unabhängig voneinander H, C₁-C₁₈-Alkyl, C₆-C₁₈-Aryl, C₆-C₁₈-Aralkyl, C₆-C₁₈-Alkyl-Aryl bedeuten und X für C₁-C₁₈-Alkyl, C₆-C₁₈-Aryl, C₆-C₁₈-Aralkyl, C₆-C₁₈-Alkyl-Aryl und/oder für Mg, Ca, Al, Sb, Sn, Ge, Ti, Fe, Zr, Zn, Ce, Bi, Sr, Mn, Cu, Ni, Li, Na, K, H und/oder eine protonierte Stickstoffbase steht, wobei die Gruppen C₆-C₁₈-Aryl, C₆-C₁₈-Aralkyl und C₆-C₁₈-Alkyl-Aryl mit -C(O)CH₃, OH, CH₂OH, NH₂, NO₂, OCH₃, SH und/oder OC(O)CH₃ substituiert sein können und Y für eine Mineralsäure, Carbonsäure, Lewissäure oder organische Säure steht, wobei n für eine ganze oder gebrochene Zahl von 0 bis 4 steht und es sich bei dem Katalysatoren A und C um Übergangsmetalle, Übergangsmetallverbindungen und/oder Katalysatorsysteme handelt, die sich aus einem Übergangsmetall und/oder einer Übergangsmetallverbindung und mindestens einem Liganden zusammensetzen und es sich bei dem Katalysator B um Peroxide bildende Verbindungen, Peroxoverbindungen und/oder Azo-Verbindungen handelt.

2. Verfahren nach Anspruch 1, **dadurch gekennzeichnet, dass** man die nach Schritt c) erhaltene mono-aminofunktionalisierten Dialkylphosphinsäure, deren Salz oder Ester (III) anschließend in einem Schritt d) mit Metallverbindungen von Mg, Ca, Al, Sb, Sn, Ge, Ti, Fe, Zr, Zn, Ce, Bi, Sr, Mn, Li, Na, K und/oder einer protonierte Stickstoffbase zu den entsprechenden mono-aminofunktionalisierten Dialkylphosphinsäuresalzen (III) dieser Metalle und/oder einer Stickstoffverbindung umsetzt.

3. Verfahren nach Anspruch 1 oder 2, **dadurch gekennzeichnet, dass** R¹, R², R³, R⁴, R⁵, R⁶, R⁷ gleich oder verschieden sind und, unabhängig voneinander H, Methyl, Ethyl, n-Propyl, Isopropyl, n-Butyl, Isobutyl, tert. Butyl und/oder Phenyl bedeuten.

4. Verfahren nach einem oder mehreren der Ansprüche 1 bis 3, **dadurch gekennzeichnet, dass** X H, Ca, Mg, Al, Zn, Ti, Fe, Ce, Methyl, Ethyl, n-Propyl, Isopropyl, n-Butyl, Isobutyl, tert. Butyl, Phenyl, Ethylenglykol, Propylglykol, Butylglykol, Pentylglykol, Hexylglykol, Allyl und/oder Glycerin bedeuten.

5. Verfahren nach einem oder mehreren der Ansprüche 1 bis 4, **dadurch gekennzeichnet, dass** es sich bei den Übergangsmetallen und/oder Übergangsmetallverbindungen um solche aus der siebten und achten Nebengruppe handelt.

6. Verfahren nach einem oder mehreren der Ansprüche 1 bis 5, **dadurch gekennzeichnet, dass** es sich bei den Übergangsmetallen und/oder Übergangsmetallverbindungen um Rhodium, Nickel, Palladium, Platin und/oder Ruthenium handelt.

7. Verfahren nach einem oder mehreren der Ansprüche 1 bis 6, **dadurch gekennzeichnet, dass** es sich bei dem Katalysator B um Wasserstoffperoxid, Natriumperoxid, Lithiumperoxid, Kaliumpersulfat, Natriumpersulfat, Ammoniumpersulfat, Natriumperoxodisulfat, Kaliumperoxoborat, Peressigsäure, Benzoylperoxid, Di-t-butylperoxid und/oder Peroxodischwefelsäure und/oder um Azodiisobutyronitril, 2,2'-Azobis(2-amidinopropan)-dihydrochlorid und/oder 2,2'-Azobis(N,N'-dimethylen-isobutyramidin)-dihydrochlorid handelt.

8. Verfahren nach einem oder mehreren der Ansprüche 1 bis 7, **dadurch gekennzeichnet, dass** es sich bei dem Acrylnitril um Acrylnitril, Methacrylnitril, Ethyl-2-cyanoacrylat, 3-Phenylacrylnitril, 2-Methyl-2-butennitril handelt.

9. Verfahren nach einem oder mehreren der Ansprüche 1 bis 8, **dadurch gekennzeichnet, dass** es sich bei den Reduktionsmitteln um Metallhydride, Borhydride, Metallborhydride, Aluminiumhydride und/oder Metallaluminiumhydride handelt.

10. Verfahren nach einem oder mehreren der Ansprüche 1 bis 9, **dadurch gekennzeichnet, dass** es bei dem Alkohol der allgemeinen Formel M-OH um einwertige organische Alkohole mit einer Kohlenstoffkettenlänge von C₁-C₁₈ und es bei dem Alkohol der allgemeinen Formel M'-OH um mehrwertige organische Alkohole mit einer Kohlenstoffkettenlänge von C₁-C₁₈ handelt.

11. Herstellung von mono-aminofunktionalisierten Dialkylphosphinsäuren, -estern und -salzen nach einem oder mehreren der Ansprüche 1 bis 10 und anschließende Verwendung dieser Produkte als Zwischenprodukt für weitere Synthesen, als Binder, als Vernetzer bzw. Beschleuniger beim Aushärten von Epoxyharzen, Polyurethanen und ungesättigten Polyesterharzen, als Polymerstabilisatoren, als Pflanzenschutzmittel, als Sequestrierungsmittel, als Mineralöl-Additiv, als Korrosionsschutzmittel, in Wasch- und Reinigungsmittelanwendungen und in Elektronikanwendungen.

12. Herstellung von mono-aminofunktionalisierten Dialkylphosphinsäuren, -salzen und -estern nach einem oder mehreren der Ansprüche 1 bis 10 und anschließende Verwendung dieser Produkte als Flammschutzmittel, insbesondere als Flammschutzmittel für Klarlacke und Intumeszenzbeschichtungen, als Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung.

## Claims

1. A method for producing monoamino-functionalized dialkylphosphinic acids, esters and salts by means of acrylonitriles, which comprises
a) reacting a phosphinic acid source (I) 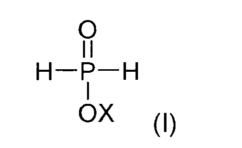 with olefins (IV) 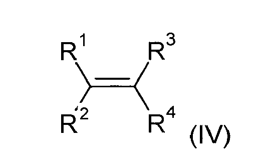 in the presence of a catalyst A to form an alkylphosphonous acid, salt or ester (II) 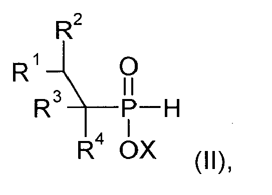
b) reacting the resulting alkylphosphonous acid, salt or ester (II) with an acrylonitrile (V) 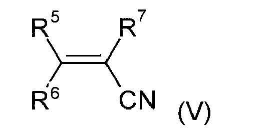 in the presence of a catalyst B to form the monofunctionalized dialkylphosphinic acid derivative (VI) 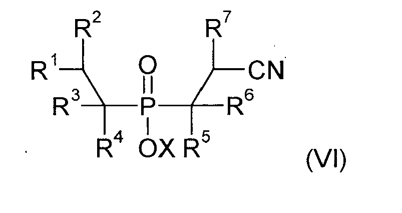 and
c) reacting the resulting monofunctionalized dialkylphosphinic acid derivative (VI) with a reducing agent or in the presence of a catalyst C with hydrogen to form the monoamino-functionalized dialkylphosphinic acid derivative (III) 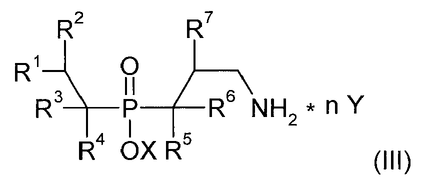 or esterifying the alkylphosphonous acid, salt or ester (II) obtained after step a) and/or the monofunctionalized dialkylphosphinic acid, salt or ester (VI) obtained after step b) and/or the monoamino-functionalized dialkylphosphinic acid, salt or ester (III) obtained after step c) and/or the particular resulting reaction solution thereof with an alkylene oxide or an alcohol M-OH and/or M'-OH, and subjecting the respectively resulting alkylphosphonous ester (II), monofunctionalized dialkylphosphinic ester (VI) and/or monoamino-functionalized dialkylphosphinic ester (III) to the further reaction steps b) or c), where R¹, R², R³, R⁴, R⁵, R⁶, R⁷ are identical or different and are each independently H, C₁-C₁₈-alkyl, C₆-C₁₈-aryl, C₆-C₁₈-aralkyl, C₆-C₁₈-alkylaryl and X is C₁₋₁₈-alkyl, C₆-C₁₈-aryl, C₆-C₁₈-aralkyl, C₆-C₁₈-alkylaryl and/or Mg, Ca, Al, Sb, Sn, Ge, Ti, Fe, Zr, Zn, Ce, Bi, Sr, Mn, Cu, Ni, Li, Na, K, H and/or a protonated nitrogen base, it being possible for the groups C₆-C₁₈-aryl, C₆-C₁₈-aralkyl and C₆-C₁₈-alkylaryl to be substituted with -C(O)CH₃, OH, CH₂OH, NH₂, NO₂, OCH₃, SH and/or OC(O)CH₃ and Y being an inorganic acid, carboxylic acid, Lewis acid or organic acid, n representing an integer or a fraction in the range from 0 to 4 and the catalysts A and C comprise transition metals, transition metal compounds and/or catalyst systems composed of a transition metal and/or transition metal compound and at least one ligand, and the catalyst B comprises peroxide-forming compounds, peroxo compounds and/or azo compounds.

2. The method according to claim 1 wherein the monoamino-functionalized dialkylphosphinic acid, its salt or ester (III) obtained after step c) is subsequently reacted in a step d) with metal compounds of Mg, Ca, Al, Sb, Sn, Ge, Ti, Fe, Zr, Zn, Ce, Bi, Sr, Mn, Li, Na, K and/or a protonated nitrogen base to form the corresponding monoamino-functionalized dialkylphosphinic acid salts (III) of these metals and/or of a nitrogen compound.

3. The method according to claim 1 or 2 wherein R¹, R², R³, R⁴, R⁵, R⁶, R⁷ are identical or different and are each independently H, methyl, ethyl, n-propyl, isopropyl, n-butyl, isobutyl, tert-butyl and/or phenyl.

4. The method according to one or more of claims 1 to 3 wherein X is H, Ca, Mg, Al, Zn, Ti, Fe, Ce, methyl, ethyl, n-propyl, isopropyl, n-butyl, isobutyl, tert-butyl, phenyl, ethylene glycol, propyl glycol, butyl glycol, pentyl glycol, hexyl glycol, allyl and/or glycerol.

5. The method according to one or more of claims 1 to 4 wherein the transition metals and/or transition metal compounds comprise such from the seventh and eighth transition groups.

6. The method according to one or more of claims 1 to 5 wherein the transition metals and/or transition metal compounds comprise rhodium, nickel, palladium, platinum and/or ruthenium.

7. The method according to one or more of claims 1 to 6 wherein the catalyst B comprises hydrogen peroxide, sodium peroxide, lithium peroxide, potassium persulfate, sodium persulfate, ammonium persulfate, sodium peroxodisulfate, potassium peroxoborate, peracetic acid, benzoyl peroxide, di-t-butyl peroxide and/or peroxodisulfuric acid and/or comprises azobisisobutyronitrile, 2,2'-azobis(2-amidinopropane) dihydrochloride and/or 2,2'-azobis(N,N'dimethylene-isobutyramidine) dihydrochloride.

8. The method according to one or more of claims 1 to 7 wherein the acrylonitrile comprises acrylonitrile, methacrylonitrile, ethyl 2-cyanoacrylate, 3-phenylacrylonitrile, 2-methyl-2-butenenitrile.

9. The method according to one or more of claims 1 to 8 wherein the reducing agents comprise metal hydrides, borohydrides, metal borohydrides, aluminum hydrides and/or metal aluminum hydrides.

10. The method according to one or more of claims 1 to 9 wherein the alcohol of the general formula M-OH comprises monohydric organic alcohols having a carbon chain length of C₁-C₁₈ and the alcohol of the general formula M'-OH comprises polyhydric organic alcohols having a carbon chain length of C₁-C₁₈.

11. The production of monoamino-functionalized dialkylphosphinic acids, esters and salts according to one or more of claims 1 to 10 and subsequent use of these products as an intermediate for further syntheses, as a binder, as a crosslinker or accelerant to cure epoxy resins, polyurethanes and unsaturated polyester resins, as polymer stabilizers, as crop protection agents, as a sequestrant, as a mineral oil additive, as a corrosion control agent, in washing and cleaning applications and in electronic applications.

12. The production of monoamino-functionalized dialkylphosphinic acids, salts and esters according to one or more of claims 1 to 10 and subsequent use of these products as a flame retardant, more particularly as a flame retardant for clearcoats and intumescent coatings, as a flame retardant for wood and other cellulosic products, as a reactive and/or nonreactive flame retardant for polymers, in the manufacture of flame-retardant polymeric molding materials, in the manufacture of flame-retardant polymeric molded articles and/or for flame-retardant finishing of polyester and cellulose straight and blend fabrics by impregnation.

## Revendications

1. Procédé pour la préparation d'acides dialkylphosphiniques, d'esters et de sels d'acides dialkylphosphiniques, monofonctionnalisés par amino au moyen d'acrylonitriles, **caractérisé en ce que**
a) on transforme une source d'acide phosphinique (I) 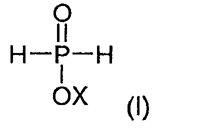 avec des oléfines (IV) 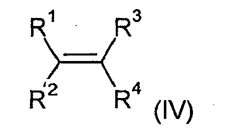 en présence d'un catalyseur A en acide alkylphosphoneux, son sel ou son ester (II) 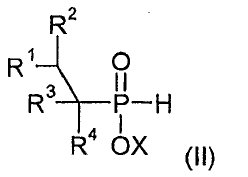
b) on transforme l'acide alkylphosphoneux ainsi formé, son sel ou son ester (II) avec un acrylonitrile (V) 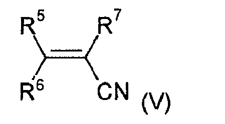 en présence d'un catalyseur B en dérivé d'acide dialkylphosphinique monofonctionnalisé (VI) et 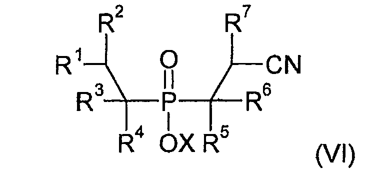
c) on transforme le dérivé d'acide dialkylphosphinique monofonctionnalisé (VI) ainsi formé avec un réducteur ou en présence d'un catalyseur C avec de l'hydrogène en dérivé d'acide dialkylphosphinique monofonctionnalisé par amino (III) 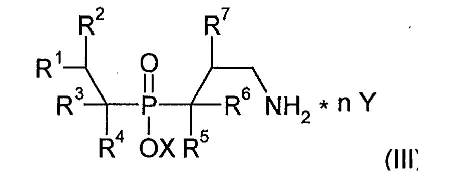 ou on estérifie l'acide alkylphosphoneux obtenu après l'étape a), son sel ou son ester (II) et/ou l'acide dialkylphosphinique, son sel ou son ester (VI) monofonctionnalisé obtenu après l'étape b), et/ou l'acide dialkylphosphinique monofonctionnalisé par amino, son sel ou son ester (III) obtenu après l'étape c) et/ou à chaque fois la solution réactionnelle résultante de ceux-ci avec un oxyde d'alkylène ou un alcool M-OH et/ou M'-OH, et on soumet l'ester de l'acide alkylphosphoneux (II), l'ester de l'acide dialkylphosphinique monofonctionnalisé (VI) et/ou l'acide dialkylphosphinique (III) monofonctionnalisé par amino à chaque fois obtenu aux autres étapes de réaction b) ou c), R¹, R², R³, R⁴, R⁵, R⁶, R⁷ étant identiques ou différents et signifiant, indépendamment l'un de l'autre, H, C₁-C₁₈-alkyle, C₆-C₁₈-aryle, C₆-C₁₈-aralkyle, C₆-C₁₈-alkyl-aryle et X représentant C₁-C₁₈-alkyle, C₆-C₁₈-aryle, C₆-C₁₈-aralkyle, C₆-C₁₈-alkyl-aryle et/ou Mg, Ca, Al, Sb, Sn, Ge, Ti, Fe, Zr, Zn, Ce, Bi, Sr, Mn, Cu, Ni, Li, Na, K, H et/ou une base azotée protonée et les groupes C₆-C₁₈-aryle, C₆-C₁₈-aralkyle et C₆-C₁₈-alkyl-aryle pouvant être substitués par -C(O)CH₃, OH, CH₂OH, NH₂, NO₂, OCH₃, SH et/ou OC(O)CH₃ et Y représentant un acide minéral, un acide carboxylique, un acide de Lewis ou un acide organique, n valant un nombre entier ou décimal de 0 à 4 et où il s'agit pour les catalyseurs A et C, de métaux de transition, de composés de métal de transition et/ou de systèmes catalytiques, qui sont composés d'un métal de transition et/ou d'un composé de métal de transition et d'au moins un ligand et où il s'agit pour le catalyseur B de composés formant des peroxydes, de composés peroxo et/ou de composés azo.

2. Procédé selon la revendication 1, **caractérisé en ce qu'**on transforme ensuite l'acide dialkylphosphinique monofonctionnalisé par amino, son sel ou son ester (III) obtenu après l'étape c) dans une étape d) avec des composés métalliques de Mg, Ca, Al, Sb, Sn, Ge, Ti, Fe, Zr, Zn, Ce, Bi, Sr, Mn, Li, Na, K et/ou une base azotée protonée en sels d'acide dialkylphosphinique monofonctionnalisé par amino (III) correspondant de ces métaux et/ou d'un composé azoté.

3. Procédé selon la revendication 1 ou 2, **caractérisé en ce que** R¹, R², R³, R⁴, R⁵, R⁶, R⁷ sont identiques ou différents et signifient, indépendamment les uns des autres, H, méthyle, éthyle, n-propyle, iso-propyle, n-butyle, iso-butyle, tert-butyle et/ou phényle.

4. Procédé selon l'une ou plusieurs des revendications 1 à 3, **caractérisé en ce que** X signifie H, Ca, Mg, Al, Zn, Ti, Fe, Ce, méthyle, éthyle, n-propyle, iso-propyle, n-butyle, isobutyle, tert-butyle, phényle, éthylèneglycol, propylglycol, butylglycol, pentylglycol, hexylglycol, allyle et/ou glycérol.

5. Procédé selon l'une ou plusieurs des revendications 1 à 4, **caractérisé en ce qu'**il s'agit, pour les métaux de transition et/ou les composés de métal de transition de ceux du septième et huitième groupe secondaire.

6. Procédé selon l'une ou plusieurs des revendications 1 à 5, **caractérisé en ce qu'**il s'agit, pour les métaux de transition et/ou les composés de métal de transition, de rhodium, de nickel, de palladium, de platine et/ou de ruthénium.

7. Procédé selon l'une ou plusieurs des revendications 1 à 6, **caractérisé en ce qu'**il s'agit, pour le catalyseur B, de peroxyde d'hydrogène, de peroxyde de sodium, de peroxyde de lithium, de persulfate de potassium, de persulfate de sodium, de persulfate d'ammonium, de peroxodisulfate de sodium, de peroxoborate de potassium, d'acide peracétique, de peroxyde de benzoyle, de peroxyde de di-t-butyle et/ou d'acide peroxodisulfurique et/ou d'azodiisobutyronitrile, de dichlorhydrate de 2,2'-azobis(2-amidinopropane) et/ou de dichlorhydrate de 2,2'-azobis(N,N'-diméthylène-isobutyramidine).

8. Procédé selon l'une ou plusieurs des revendications 1 à 7, **caractérisé en ce qu'**il s'agit, pour l'acrylonitrile d'acrylonitrile, de méthacrylonitrile, de 2-cyanoacrylate d'éthyle, de 3-phénylacrylonitrile, de 2-méthyl-2-butène-nitrile.

9. Procédé selon l'une ou plusieurs des revendications 1 à 8, **caractérisé en ce qu'**il s'agit, pour les réducteurs, d'hydrures métalliques, de borohydrures, de borohydrures métalliques, d'hydrures d'aluminium et/ou d'hydrures d'aluminium métalliques.

10. Procédé selon l'une ou plusieurs des revendications 1 à 9, **caractérisé en ce qu'**il s'agit, pour l'alcool de formule générale M-OH, d'alcools organiques monovalents présentant une longueur de chaîne carbonée de C₁-C₁₈ et il s'agit, pour l'alcool de formule générale M'-OH, d'alcools organiques polyvalents présentant une longueur de chaîne carbonée de C₁-C₁₈.

11. Préparation d'acides dialkylphosphiniques, d'esters et de sels d'acides dialkylphosphiniques, monofonctionnalisés par amino selon l'une ou plusieurs des revendications 1 à 10 et utilisation consécutive de ces produits comme produit intermédiaire pour d'autres synthèses, comme liants, comme réticulants ou, selon le cas, accélérateurs lors du durcissement de résines époxy, de polyuréthanes et de résines de polyester insaturées, comme stabilisants de polymères, comme agents de phytoprotection, comme agents de séquestration, comme additifs d'huile minérale, comme agents de protection contre la corrosion, dans des utilisations d'agents de lavage et de nettoyage et dans des applications électroniques.

12. Préparation d'acides dialkylphosphiniques, d'esters et de sels d'acides dialkylphosphiniques, monofonctionnalisés par amino selon l'une ou plusieurs des revendications 1 à 10 et utilisation consécutive de ces produits comme agents ignifuges, en particulier comme agents ignifuges pour des laques claires et des revêtements intumescents, comme agents ignifuges pour bois et d'autres produits contenant de la cellulose, comme agents ignifuges réactifs et/ou non réactifs pour polymères, pour la préparation de masses de moulage polymère ignifugées, pour la préparation de corps façonnés polymères ignifugés et/ou pour l'apprêt inhibant les flammes de polyesters et de tissus en cellulose pure et de tissus mixtes par imprégnation.
